# EUROPEAN PATENT APPLICATION

(11) **EP 4 823 095 A1**
(43) Date of publication of application: **14.10.2026**
(21) Application number: 24917677.7
(22) Date of filing: 16.01.2024
(51) Int. Cl.: H04N 19/46

(54) **DATA ENCAPSULATION METHOD AND ELECTRONIC DEVICE**

(71) Applicant: Huawei Technologies Co., Ltd., Shenzhen, Guangdong 518129 (CN)
(72) Inventor: YOU, Hongjie, Shenzhen, Guangdong 518129 (CN); XU, Weiwei, Shenzhen, Guangdong 518129 (CN); YU, Quanhe, Shenzhen, Guangdong 518129 (CN); WANG, Yichuan, Shenzhen, Guangdong 518129 (CN)
(74) Representative: Körber, Martin Hans
(86) International application number: PCT/CN2024/072644
(87) International publication number: WO 2025/152050

(57) **Abstract**

Embodiments of this application provide a data encapsulation method and an electronic device. The method includes: first, obtaining T.35 information, where the T.35 information includes country code, terminal provider code, and terminal provider oriented code; and then encapsulating the T.35 information into an image file format, where the image file format includes a first box, and the first box includes the T.35 information. In this way, a file can carry the T.35 information. When the T.35 information carries metadata (including HDR metadata) of multimedia, the HDR metadata is restored and correctly used at a decoder side to correctly display an HDR image.

## Description

### TECHNICAL FIELD

Embodiments of this application relate to the field of data processing, and in particular, to a data encapsulation method and an electronic device.

### BACKGROUND

Currently, in image file formats such as a high efficiency image file format (High Efficiency Image File Format, HEIF) and an AV1 image file format (AV1 Image File Format, AVIF), some metadata may be encapsulated. However, these image file formats do not support encapsulation of HDR metadata that is common in a high dynamic range (High Dynamic Range, HDR) standard and that exists in T.35 information. The T.35 information may carry information specified in the T.35 specification "Procedure for the allocation of ITU defined codes for non-standard facilities" released by the ITU-T (International Telecommunication Union Telecommunication Standardization Sector). Therefore, an existing image file format cannot carry the T.35 information, and correct HDR metadata cannot be restored and used at a decoder side (for example, operations such as tone mapping cannot be performed based on the correct HDR metadata). As a result, an HDR image cannot be correctly displayed.

### SUMMARY

In view of this, this application provides a data encapsulation method and an electronic device.

According to a first aspect, an embodiment of this application provides a data encapsulation method. The method includes: first obtaining T.35 information, where the T.35 information includes country code (Country code), terminal provider code (Terminal provider code), and terminal provider oriented code (Terminal provider oriented code); and then encapsulating the T.35 information into an image file format, where the image file format includes a first box, and the first box includes the T.35 information.

In this application, the T.35 information and a location of the T.35 information in the image file format may be predefined according to a specification/regulation of the image file format. Then, the T.35 information may be encapsulated into the image file format based on the predefined T.35 information and the predefined location of the T.35 information. In this way, the image file format can carry the T.35 information. When the T.35 information carries metadata (which may include HDR metadata) of multimedia, the HDR metadata can be restored and correctly used at a decoder side to correctly display the HDR image.

For example, in this application, a user-defined box (Box) may be added based on an existing image file format, the added box may be used to store the T.35 information, and a location of the added box is defined. To distinguish the added box from an existing box in the existing image file format, the added box may be referred to as the first box (in some scenarios, the added box may also be referred to as an it35 box or another name, and this is not limited in this application). In other words, in this application, the T.35 information may be encapsulated into the first box of the image file format.

For example, the image file format may include but is not limited to JPEG, WebP, PNG, HEIF, AVIF, JXL, and the like. This is not limited in this application. In this application, the HEIF is used as an example for description.

For example, a box is a general mechanism used to organize and store data, so that a file can contain multiple types of information in a flexible manner. A hierarchy and content of the box are defined in corresponding standard specifications to ensure correct parsing and processing of the file. The "box" may have another name in another image file format or a newly generated image file format. A name of the box is not limited in this application.

According to the first aspect, the image file format further includes a second box, the second box includes either a metadata box or a stream data box, and the first box is nested in the second box.

For example, the metadata box may be used to store the metadata of the multimedia, and may be referred to as a MetaBox (meta).

For example, the stream data box may be used to store an image sequence, and may be referred to as a MovieBox (moov).

In other words, the first box may be nested in the MetaBox, or may be nested in the MovieBox. This is not limited in this application.

According to any one of the first aspect or the implementations of the first aspect, the second box includes a plurality of third boxes, there is a hierarchical relationship between the plurality of third boxes, and the first box is nested in a third box at any level.

For example, when the second box is the metadata box, the metadata box may include the plurality of third boxes, and the third boxes include but are not limited to an item Information Box (iinf), an item Information Entry Box (infe), an item Property Container Box (ipco), an item Property Association Box (ipma), an item Location Box (iloc), and the like. The hierarchical relationship between the plurality of third boxes may be shown in a structure 1 in a specific implementation. The first box may be nested in a third box at any level.

When the second box is the stream data box, the stream data box may include the plurality of third boxes, and the third boxes include but are not limited to a SampleDescriptionBox (stsd), a Sample Group Description Box (sgpd), a metadata Sample Entry Box, a timed metadata Track Box, a Track Box, and the like. The hierarchical relationship between the plurality of third boxes may be shown in a structure 2 in a specific implementation. The first box may be nested in a third box at any level.

According to any one of the first aspect or the implementations of the first aspect, the image file format further includes an item identifier and a media box, the item identifier indicates that the T.35 information is an item, the T.35 information includes header information and a payload, the header information includes the country code, the terminal provider code, and the terminal provider oriented code, the payload includes metadata of multimedia, the first box includes the header information of the T.35 information, and the media box includes the payload of the T.35 information.

For example, an item (item) is data that does not require timed processing (namely, untimed data, or non-time-varying data); and is relative to sample data. The item identifier may be referred to as an item ID.

For example, the payload may be referred to as a payload, and the header information may be referred to as a header.

For example, the metadata of the multimedia may include the HDR metadata.

For example, the HDR metadata may include static metadata and/or dynamic metadata.

For example, the static metadata includes color space of a mastering display (Mastering Display), maximum luminance and minimum luminance of the mastering display, maximum luminance of a video sequence, and maximum average luminance of the video sequence, and is used for correct displaying via a reference display and restoration of a creator's intent in terms of functions. The static metadata is static data that does not change with time in the video sequence. For example, the maximum luminance of the video sequence is a maximum value of largest luminance of all frames.

For example, the dynamic metadata includes most of the static metadata and further includes metadata of tone mapping of a display device. In terms of functions, the most of the static metadata and the metadata are information closely related to processing processes such as displaying and tone mapping, for example, indicating selection of a tone mapping algorithm and parameters from a high dynamic range to a low dynamic range. In the video sequence, the dynamic metadata usually changes with time. For example, during scene switching, maximum luminance of an image, the maximum luminance of the mastering display, or the like also changes accordingly.

For example, the media box may be used to store image data, and may be referred to as a MediaDataBox (mdat).

This manner is applicable to a case in which the T.35 information carries static metadata.

It should be understood that the metadata of the multimedia may be metadata of an image, metadata of an audio, metadata of a video, or the like. This is not limited in embodiments of this application.

According to any one of the first aspect or the implementations of the first aspect, the T.35 information is an item, the metadata box includes an image information box, the first box is nested in the image information box, and the first box is an item information entry box.

For example, the image information box may be used to store item information, and may be referred to as an item Information Box (iinf Box).

For example, the item information entry box may be used to store an item information entry, and may be referred to as an item Information Entry Box (infe Box). In other words, the first box is an item information entry box.

This manner is applicable to a case in which the T.35 information carries static metadata.

According to any one of the first aspect or the implementations of the first aspect, the T.35 information is an item property, the metadata box includes an item property container box and an item property association box, the first box is nested in the item property container box, and the item property association box includes information about association between the T.35 information and a corresponding item.

For example, the item property may be referred to as an item property.

For example, the item property container box may be used to store an item property, and may be referred to as an item Property Container Box (ipco Box).

For example, the item property association box may be used to store item property association information, and may be referred to as an item Property Association Box (ipma Box).

For example, a property (property) is an attribute related to an item.

This manner is applicable to a case in which the T.35 information carries static metadata.

According to any one of the first aspect or the implementations of the first aspect, the T.35 information is a sample entry, the stream data box includes a track box, the track box includes a sample description box, and the first box is nested in the sample description box.

For example, the sample entry may be referred to as a Sample Entry. A sample (sample) is all data associated with a single time point. In other words, the sample is data at a time point, or is timed data or time-varying data.

For example, the track box may also be referred to as a Track Box. A track (track) is a timed sequence of related samples (Samples) in an ISO base media file. For multimedia, the track corresponds to a sequence of images or sampled audios. For a hint track, the track corresponds to a streaming media channel.

It should be noted that, in the HEIF, consecutive or timed media or metadata streams form a track (Track), and static media or metadata is stored as an item (item).

For example, the sample description box may be used to store a sample entry (Sample Entry), and may be referred to as a SampleDescriptionBox (stsd Box).

This manner is applicable to a case in which the T.35 information carries static metadata.

According to any one of the first aspect or the implementations of the first aspect, the T.35 information is a sample group entry, the stream data box includes a track box, the track box includes a sample group description box, and the first box is nested in the sample group description box.

For example, the sample group description box may store a property for describing a sample group (Sample Group), and may be referred to as a Sample Group Description Box (sgpd Box).

All entries in a SampleToGroupBox or CompactSampleToGroupBox with a same grouping _type_parameter value should be mapped to a same type of T.35 information. This means that T.35 sample group entries should have at least same country code, terminal provider code, and terminal provider oriented code in ITU-T T.35, a same T.35-specific type, and same version information (if applicable). This is very useful when the metadata carried in the T.35 information changes infrequently (a small quantity of pieces of same metadata) and a size of a MovieBox causes no problem.

This manner can reduce redundancy of storing same metadata in all samples, and is applicable to a case in which the T.35 information carries static metadata or dynamic metadata.

According to any one of the first aspect or the implementations of the first aspect, the T.35 information is a sample entry, the stream data box includes a track box, the track box includes a sample description box and a sample group description box, the T.35 information includes header information and a payload, the header information includes the country code, the terminal provider code, and the terminal provider oriented code, the payload includes metadata of multimedia, the first box includes the header information of the T.35 information, the first box is nested in the sample group description box, and the sample description box includes the payload of the T.35 information.

In this way, very frequent processing of T.35 metadata (a large quantity of pieces of same metadata) is allowed.

This manner is applicable to a case in which the T.35 information carries static metadata or dynamic metadata. The dynamic metadata belongs to the payload of the T.35 information.

According to any one of the first aspect or the implementations of the first aspect, the T.35 information is a sample entry, the stream data box includes a timed metadata track box, the timed metadata track box includes a metadata sample entry box, and the first box is nested in the metadata sample entry box.

For example, the timed metadata track box may be used to store timed metadata, and may be referred to as a timed metadata Track Box.

For example, the metadata sample entry box may be used to store a timed metadata entry, and may be referred to as a metadata Sample Entry Box.

This manner is applicable to a case in which the T.35 information carries dynamic metadata.

According to any one of the first aspect or the implementations of the first aspect, the method further includes: obtaining encoded multimedia data; and encapsulating the encoded multimedia data into the image file format, where the image file format further includes the media box or the stream data box, and the media box or the stream data box includes the encoded multimedia data. In this way, the encoded multimedia data and the T.35 information may be encapsulated into the same image file format.

According to any one of the first aspect or the implementations of the first aspect, the T.35 information further includes the metadata of the multimedia.

According to a second aspect, an embodiment of this application provides a data obtaining method. The method includes: first receiving an image file format, where the image file format includes a first box, and the first box includes T.35 information; and then reading the T.35 information from the first box of the image file format, where the T.35 information includes country code, terminal provider code, and terminal provider oriented code.

According to the second aspect, the image file format further includes a second box, the second box includes either a metadata box or a stream data box, and the first box is nested in the second box.

According to any one of the second aspect or the implementations of the second aspect, the second box includes a plurality of third boxes, there is a hierarchical relationship between the plurality of third boxes, and the first box is nested in a third box at any level.

According to any one of the second aspect or the implementations of the second aspect, the image file format further includes an item identifier and a media box, the item identifier indicates that the T.35 information is an item, the T.35 information includes header information and a payload, the header information includes the country code, the terminal provider code, and the terminal provider oriented code, the payload includes metadata of multimedia, the first box includes the header information of the T.35 information, and the media box includes the payload of the T.35 information.

According to any one of the second aspect or the implementations of the second aspect, the T.35 information is an item, the metadata box includes an image information box, the first box is nested in the image information box, and the first box is an item information entry box.

According to any one of the second aspect or the implementations of the second aspect, the T.35 information is an item property, the metadata box includes an item property container box and an item property association box, the first box is nested in the item property container box, and the item property association box includes information about association between the T.35 information and a corresponding item.

According to any one of the second aspect or the implementations of the second aspect, the T.35 information is a sample entry, the stream data box includes a track box, the track box includes a sample description box, and the first box is nested in the sample description box.

According to any one of the second aspect or the implementations of the second aspect, the T.35 information is a sample group entry, the stream data box includes a track box, the track box includes a sample group description box, and the first box is nested in the sample group description box.

According to any one of the second aspect or the implementations of the second aspect, the T.35 information is a sample entry, the stream data box includes a track box, the track box includes a sample description box and a sample group description box, the T.35 information includes header information and a payload, the header information includes the country code, the terminal provider code, and the terminal provider oriented code, the payload includes metadata of multimedia, the first box includes the header information of the T.35 information, the first box is nested in the sample group description box, and the sample description box includes the payload of the T.35 information.

According to any one of the second aspect or the implementations of the second aspect, the T.35 information is a sample entry, the stream data box includes a timed metadata track box, the timed metadata track box includes a metadata sample entry box, and the first box is nested in the metadata sample entry box.

According to any one of the second aspect or the implementations of the second aspect, the image file format further includes the media box or the stream data box, and the media box or the stream data box includes encoded multimedia data. The method further includes: obtaining the encoded multimedia data from the media box or the stream data box of the image file format; and decoding the encoded multimedia data to obtain reconstructed multimedia data.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, an embodiment of this application provides an image file format, where the image file format is obtained through encapsulation according to any one of the first aspect or the implementations of the first aspect.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, an embodiment of this application provides a data encapsulation apparatus. The data encapsulation apparatus includes:
an obtaining module, configured to obtain T.35 information, where the T.35 information includes country code, terminal provider code, and terminal provider oriented code; and
an encapsulation module, configured to encapsulate the T.35 information into an image file format, where the image file format includes a first box, and the first box includes the T.35 information.

For example, the data encapsulation apparatus may be configured to perform the method according to any one of the first aspect or the possible implementations of the first aspect.

Any one of the fourth aspect and the implementations of the fourth aspect corresponds to any one of the first aspect and the implementations of the first aspect. For technical effect corresponding to any one of the fourth aspect and the implementations of the fourth aspect, refer to technical effect corresponding to any one of the first aspect and the implementations of the first aspect. Details are not described herein again.

According to a fifth aspect, an embodiment of this application provides a data reading apparatus. The data reading apparatus includes:
a receiving module, configured to receive an image file format, where the image file format includes a first box, and the first box includes T.35 information; and
a reading module, configured to read the T.35 information from the first box of the image file format, where the T.35 information includes country code, terminal provider code, and terminal provider oriented code.

Any one of the fifth aspect and the implementations of the fifth aspect corresponds to any one of the second aspect and the implementations of the second aspect. For technical effect corresponding to any one of the fifth aspect and the implementations of the fifth aspect, refer to technical effect corresponding to any one of the second aspect and the implementations of the second aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the method according to any one of the first aspect or the possible implementations of the first aspect.

Any one of the sixth aspect and the implementations of the sixth aspect corresponds to any one of the first aspect and the implementations of the first aspect. For technical effect corresponding to any one of the sixth aspect and the implementations of the sixth aspect, refer to technical effect corresponding to any one of the first aspect and the implementations of the first aspect. Details are not described herein again.

According to a seventh aspect, an embodiment of this application provides an electronic device, including a memory and a processor. The memory is coupled to the processor. The memory stores program instructions. When the program instructions are executed by the processor, the electronic device is enabled to perform the method according to any one of the second aspect or the possible implementations of the second aspect.

Any one of the seventh aspect and the implementations of the seventh aspect correspond to any one of the second aspect and the implementations of the second aspect. For technical effect corresponding to any one of the seventh aspect and the implementations of the seventh aspect, refer to technical effect corresponding to any one of the second aspect and the implementations of the second aspect. Details are not described herein again.

According to an eighth aspect, an embodiment of this application provides a chip, including one or more interface circuits and one or more processors. The one or more processors receive or send data through the one or more interface circuits. When the one or more processors execute computer instructions, any one of the first aspect or the possible implementations of the first aspect is performed.

Any one of the eighth aspect and the implementations of the eighth aspect corresponds to any one of the first aspect and the implementations of the first aspect. For technical effect corresponding to any one of the eighth aspect and the implementations of the eighth aspect, refer to technical effect corresponding to any one of the first aspect and the implementations of the first aspect. Details are not described herein again.

According to a ninth aspect, an embodiment of this application provides a chip, including one or more interface circuits and one or more processors. The one or more processors receive or send data through the one or more interface circuits. When the one or more processors execute computer instructions, any one of the second aspect or the possible implementations of the second aspect is performed.

Any one of the ninth aspect and the implementations of the ninth aspect corresponds to any one of the second aspect and the implementations of the second aspect. For technical effect corresponding to any one of the ninth aspect and the implementations of the ninth aspect, refer to technical effect corresponding to any one of the second aspect and the implementations of the second aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the method according to any one of the first aspect or the possible implementations of the first aspect.

Any one of the tenth aspect and the implementations of the tenth aspect corresponds to any one of the first aspect and the implementations of the first aspect. For technical effect corresponding to any one of the tenth aspect and the implementations of the tenth aspect, refer to technical effect corresponding to any one of the first aspect and the implementations of the first aspect. Details are not described herein again.

According to an eleventh aspect, an embodiment of this application provides a computer-readable storage medium. The computer-readable storage medium stores a computer program. When the computer program is run on a computer or a processor, the computer or the processor is enabled to perform the method according to any one of the second aspect or the possible implementations of the second aspect.

Any one of the eleventh aspect and the implementations of the eleventh aspect corresponds to any one of the second aspect and the implementations of the second aspect. For technical effect corresponding to any one of the eleventh aspect and the implementations of the eleventh aspect, refer to technical effect corresponding to any one of the second aspect and the implementations of the second aspect. Details are not described herein again.

According to a twelfth aspect, an embodiment of this application provides a computer program product. The computer program product includes computer instructions. When the computer instructions are executed by a computer or a processor, the computer or the processor is enabled to perform the method according to any one of the first aspect or the possible implementations of the first aspect.

Any one of the twelfth aspect and the implementations of the twelfth aspect corresponds to any one of the first aspect and the implementations of the first aspect. For technical effect corresponding to any one of the twelfth aspect and the implementations of the twelfth aspect, refer to technical effect corresponding to any one of the first aspect and the implementations of the first aspect. Details are not described herein again.

According to a thirteenth aspect, an embodiment of this application provides a computer program product. The computer program product includes computer instructions. When the computer instructions are executed by a computer or a processor, the computer or the processor is enabled to perform the method according to any one of the second aspect or the possible implementations of the second aspect.

Any one of the thirteenth aspect and the implementations of the thirteenth aspect corresponds to any one of the second aspect and the implementations of the second aspect. For technical effect corresponding to any one of the thirteenth aspect and the implementations of the thirteenth aspect, refer to technical effect corresponding to any one of the second aspect and the implementations of the second aspect. Details are not described herein again.

According to a fourteenth aspect, an embodiment of this application provides a computer-readable storage medium. The computer-readable storage medium stores the image file format according to any one of the third aspect or the implementations of the third aspect.

Any one of the fourteenth aspect and the implementations of the fourteenth aspect corresponds to any one of the third aspect and the implementations of the third aspect. For technical effect corresponding to any one of the fourteenth aspect and the implementations of the fourteenth aspect, refer to technical effect corresponding to any one of the third aspect and the implementations of the third aspect. Details are not described herein again.

According to a fifteenth aspect, an embodiment of this application provides an apparatus for storing an image file format. The apparatus includes a receiver and at least one storage medium. The receiver is configured to receive an image file format. The at least one storage medium is configured to store the image file format according to any one of the third aspect or the implementations of the third aspect.

Any one of the fifth aspect and the implementations of the fifth aspect corresponds to any one of the third aspect and the implementations of the third aspect. For technical effect corresponding to any one of the fifth aspect and the implementations of the fifth aspect, refer to technical effect corresponding to any one of the third aspect and the implementations of the third aspect. Details are not described herein again.

According to a sixteenth aspect, an embodiment of this application provides an apparatus for transmitting an image file format. The apparatus includes a transmitter and at least one storage medium. The at least one storage medium is configured to store the image file format according to any one of the third aspect or the implementations of the third aspect. The transmitter is configured to: obtain the image file format from the storage medium and send the image file format to a terminal-side device through a transmission medium.

Any one of the sixteenth aspect and the implementations of the sixteenth aspect corresponds to any one of the third aspect and the implementations of the third aspect. For technical effect corresponding to any one of the sixteenth aspect and the implementations of the sixteenth aspect, refer to technical effect corresponding to any one of the third aspect and the implementations of the third aspect. Details are not described herein again.

According to a seventeenth aspect, an embodiment of this application provides a system for delivering an image file format. The system includes: at least one storage medium, configured to store the image file format according to any one of the third aspect or the implementations of the third aspect; and a streaming media device, configured to: obtain a target image file format from the at least one storage medium and send the target image file format to a terminal-side device, where the streaming media device includes a content server or a content delivery server.

Any one of the seventeenth aspect and the implementations of the seventeenth aspect corresponds to any one of the third aspect and the implementations of the third aspect. For technical effect corresponding to any one of the seventeenth aspect and the implementations of the seventeenth aspect, refer to technical effect corresponding to any one of the third aspect and the implementations of the third aspect. Details are not described herein again.

According to an eighteenth aspect, an embodiment of this application provides a data structure. The data structure includes a first box, and the first box includes T.35 information. The T.35 information includes country code (Country code), terminal provider code (Terminal provider code), and terminal provider oriented code (Terminal provider oriented code).

For example, the data structure may be an image file format.

According to the eighteenth aspect, the data structure further includes a second box, the second box includes either a metadata box or a stream data box, and the first box is nested in the second box.

According to any one of the eighteenth aspect or the implementations of the eighteenth aspect, the second box includes a plurality of third boxes, there is a hierarchical relationship between the plurality of third boxes, and the first box is nested in a third box at any level.

According to any one of the eighteenth aspect or the implementations of the eighteenth aspect, the data structure further includes an item identifier and a media box, the item identifier indicates that the T.35 information is an item, the T.35 information includes header information and a payload, the header information includes the country code, the terminal provider code, and the terminal provider oriented code, the payload includes metadata of multimedia, the first box includes the header information of the T.35 information, and the media box includes the payload of the T.35 information.

According to any one of the eighteenth aspect or the implementations of the eighteenth aspect, the T.35 information is an item, the metadata box includes an image information box, the first box is nested in the image information box, and the first box is an item information entry box.

According to any one of the eighteenth aspect or the implementations of the eighteenth aspect, the T.35 information is an item property, the metadata box includes an item property container box and an item property association box, the first box is nested in the item property container box, and the item property association box includes information about association between the T.35 information and a corresponding item.

According to any one of the eighteenth aspect or the implementations of the eighteenth aspect, the T.35 information is a sample entry, the stream data box includes a track box, the track box includes a sample description box, and the first box is nested in the sample description box.

According to any one of the eighteenth aspect or the implementations of the eighteenth aspect, the T.35 information is a sample group entry, the stream data box includes a track box, the track box includes a sample group description box, and the first box is nested in the sample group description box.

According to any one of the eighteenth aspect or the implementations of the eighteenth aspect, the T.35 information is a sample entry, the stream data box includes a track box, the track box includes a sample description box and a sample group description box, the T.35 information includes header information and a payload, the header information includes the country code, the terminal provider code, and the terminal provider oriented code, the payload includes metadata of multimedia, the first box includes the header information of the T.35 information, the first box is nested in the sample group description box, and the sample description box includes the payload of the T.35 information.

According to any one of the eighteenth aspect or the implementations of the eighteenth aspect, the T.35 information is a sample entry, the stream data box includes a timed metadata track box, the timed metadata track box includes a metadata sample entry box, and the first box is nested in the metadata sample entry box.

According to any one of the eighteenth aspect or the implementations of the eighteenth aspect, the data structure further includes the media box or the stream data box, and the media box or the stream data box includes encoded multimedia data.

### BRIEF DESCRIPTION OF DRAWINGS

FIG. 1A illustrates a diagram of an application scenario;
FIG. 1B illustrates a diagram of an end-to-end process of an HDR video;
FIG. 2A illustrates a diagram of a data encapsulation process 200;
FIG. 2B(1) and FIG. 2B(2) illustrate diagrams of image file formats;
FIG. 2C illustrates a diagram of an image file format;
FIG. 3 illustrates a diagram of a data obtaining process 300;
FIG. 4 illustrates a diagram of a data encapsulation apparatus 400;
FIG. 5 illustrates a diagram of a data reading apparatus 500;
FIG. 6 is a block diagram of an encoding/decoding system to which an embodiment of this application is applied;
FIG. 7A is a block diagram of a content supply system for implementing a content delivery service to which an embodiment of this application is applied;
FIG. 7B is a diagram of an example of a structure of a terminal device 2106 in FIG. 7A;
FIG. 8A is a diagram of an operating procedure of a streaming media system to which an embodiment of this application is applied;
FIG. 8B is a diagram of an architecture of a streaming media system to which an embodiment of this application is applied;
FIG. 9A is a diagram of a possible system architecture to which an embodiment of this application is applicable;
FIG. 9B is a diagram of a structure of an image processing system according to an embodiment of this application; and
FIG. 10 illustrates a diagram of a structure of an apparatus.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first target object and a second target object are intended to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

In descriptions of embodiments of this application, unless otherwise stated, "a plurality of' means two or more than two. For example, a plurality of processing units are two or more processing units, and a plurality of systems are two or more systems.

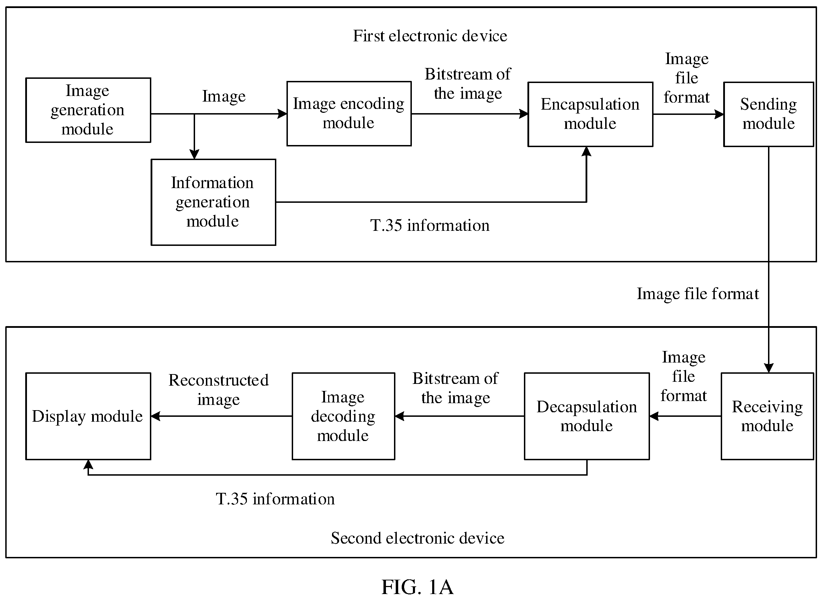

FIG. 1A illustrates a diagram of an application scenario.

Refer to FIG. 1A. For example, a first electronic device may include an image generation module, an information generation module, an image encoding module (or an image encoder), an encapsulation module, or a sending module.

For example, the image encoding module may be a software module, or may be a hardware module. This is not limited in embodiments of this application.

For example, the image generation module may include but is not limited to an image capture module, an image editing module, and the like. This is not limited in embodiments of this application.

It should be understood that FIG. 1A merely shows an example of the first electronic device. In some other embodiments of this application, the first electronic device has more or fewer modules than those shown in FIG. 1A. This is not limited in embodiments of this application.

Refer to FIG. 1A. For example, the second electronic device may include a display module, an image decoding module (or an image decoder), a decapsulation module, and a receiving module. For example, the image decoding module may be a software module, or may be a hardware module. This is not limited in embodiments of this application. It should be understood that FIG. 1A merely shows an example of the second electronic device. In some other embodiments of this application, the second electronic device has more modules than those shown in FIG. 1A. This is not limited in embodiments of this application.

Still refer to FIG. 1A. For example, after generating an image, the image generation module of the first electronic device may output the generated image to the image encoding module and the information generation module. Then, the information generation module may generate T.35 information associated with the image, and output the T.35 information to the encapsulation module. In addition, the image encoding module may encode the image to obtain a bitstream of the image (the bitstream may also be referred to as a bitstream or a bit stream), and output the bitstream of the image obtained through encoding to the encapsulation module. Then, the encapsulation module may encapsulate the bitstream of the image and the T.35 information into an image file format, and output the image file format to the sending module. Then, the sending module may send the image file format to the second electronic device.

It should be noted that the T.35 information is also binary. In this way, the T.35 information may be directly encapsulated or embedded into the image file format.

Then, the receiving module of the second electronic device may receive the image file format, and output the image file format to the decapsulation module. Then, the decapsulation module may decapsulate the image file format to obtain the bitstream of the image and the T.35 information. Then, the decapsulation module may output the bitstream of the image to the image decoding module, and output the T.35 information to the display module. Then, the image decoding module may decode the bitstream of the image to obtain a reconstructed image, and output the reconstructed image to the display module. The display module displays the reconstructed image based on the T.35 information.

For example, the first electronic device includes but is not limited to a server, a PC (Personal Computer, personal computer), a notebook computer, a tablet computer, a mobile phone, and a watch.

For example, the second electronic device includes but is not limited to a PC, a notebook computer, a tablet computer, a mobile phone, a watch, or a head-mounted display (for example, a virtual reality (Virtual Reality, VR)/augmented reality (Augmented Reality, AR) helmet).

For example, when the first electronic device is configured to perform encoding and the second electronic device is configured to perform decoding, the first electronic device may be referred to as an encoder side, and the second electronic device may be referred to as a decoder side. When the second electronic device is configured to perform encoding and the first electronic device is configured to perform decoding, the second electronic device may be referred to as an encoder side, and the first electronic device may be referred to as a decoder side.

For example, the T.35 information may include information that needs to be carried in multimedia and that is specified in the T.35 specification (that is, "Procedure for allocation of ITU defined code for non-standard facilities") released by the ITU-T: country code (Country code), terminal provider code (Terminal provider code), and terminal provider oriented code (Terminal provider oriented code). For example, the multimedia in this application may include but is not limited to an image, a video, an audio, and a text (for example, a subtitle or a bullet screen in a picture).

For example, the T.35 information may further include metadata of the image. In a possible implementation, the image encoded by the first electronic device in FIG. 1A may be an HDR image, and correspondingly, the T.35 information may further include HDR metadata.

For ease of understanding, an SDR and an HDR are first described.

A dynamic range (Dynamic Range) indicates a ratio of a maximum value to a minimum value of a variable in many fields. For a digital image, a dynamic range indicates a ratio of a maximum grayscale value to a minimum grayscale value in a displayable range of the image. A dynamic range in nature is quite large. Luminance of a night scene under the starry sky is about 0.001 cd/m², luminance of the sun is up to 1,000,000,000 cd/m², and a dynamic range can reach an order of magnitude of 1,000,000,000/0.001=10¹³. However, in a real scene in nature, the luminance of the sun and luminance of starlight are not obtained simultaneously. In a natural scene in the real world, a dynamic range is from 10⁻³ to 10⁶. Currently, in most color digital images, each of R, G, and B channels is stored by using 1 byte, namely, 8 bits. In other words, a grayscale range of each channel is from 0 to 255, where 0 to 255 is a dynamic range of the image. In a same scene in the real world, a dynamic range is from 10⁻³ to 10⁶, and is referred to as a high dynamic range (high dynamic range, HDR). Correspondingly, a dynamic range of a common image is a low dynamic range (low dynamic range, LDR). An imaging process of a digital camera is actually mapping from a high dynamic range of the real world to a low dynamic range of a photo.

A standard dynamic range image corresponds to a high dynamic range image. An 8-bit image in a format like JPEG may be considered as a standard dynamic range image. Before video cameras that can photograph HDR images emerge, conventional cameras can record photographed light information within a specific range only by controlling an exposure value. Maximum illuminance information of a display device cannot reach luminance information of the real world, and images are viewed on the display device. Therefore, an optical-electro transfer function is required. An earlier display device is a cathode ray tube (Cathode Ray Tube, CRT) display, and an optical-electro transfer function of the cathode ray tube display is a gamma function. The optical-electro transfer function based on the "gamma" function is defined in the ITU-R Recommendation BT.1886 standard.

However, with upgrade of the display device, an illuminance range of the display device increases continuously. Illuminance information of an existing consumer-level HDR display is 600 cd/m², and illuminance information of a high-end HDR display is 2,000 cd/m², which is far beyond illuminance information of an SDR display device. An optical-electro transfer function in the ITU-R Recommendation BT.1886 standard cannot well express display performance of an HDR display device. Therefore, an improved electro-optical transfer function is required to adapt to the upgrade of the display device. An idea of the optical-electro transfer function comes from a mapping function in a tone mapping algorithm, and the mapping function is appropriately adjusted to form the optical-electro transfer function. Currently, there are three common optical-electro transfer functions: a perception quantization (Perception Quantization, PQ) function, a gamma (gamma) function, a logarithm (logarithm, log) function, and a hybrid log-gamma (Hybrid Log-Gamma, HLG) function. The three optical-electro transfer functions are transfer functions specified in an AVS standard.

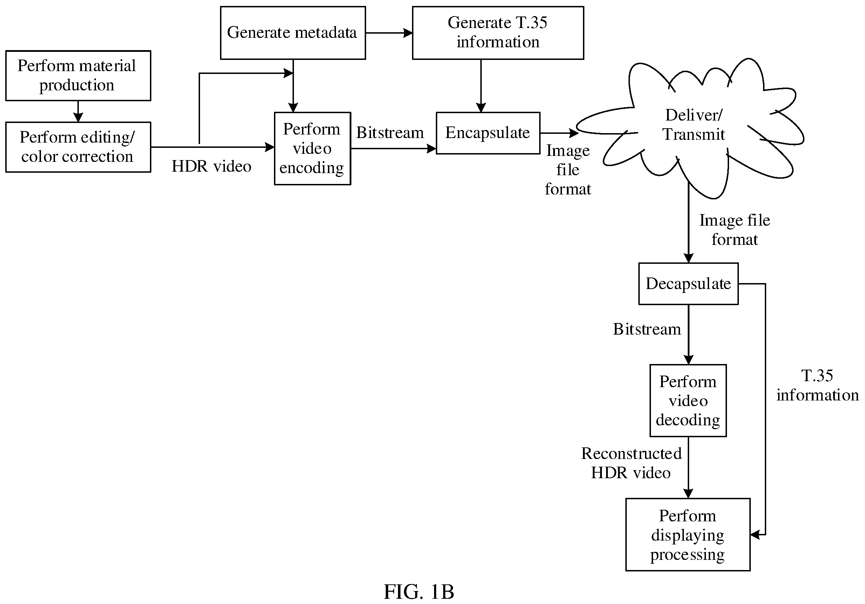

If better experience needs to be obtained for an HDR image and video, an end-to-end process is required. Refer to FIG. 1B. FIG. 1B describes an end-to-end process of an HDR video.

Because a dynamic range of the image capture module in a specific photographing state is fixed, to obtain an image with a higher dynamic range, a plurality of images with different exposure values are usually captured at a same moment, and the plurality of images with the different exposure values are composed, to obtain an image with a higher dynamic range, namely, an HDR image. A bit width of the obtained HDR image is usually greater than 10 bits, to accommodate a scene with a high dynamic range.

Refer to FIG. 1B. For example, material production may be a process in which the plurality of images with the different exposure values captured at the same moment are composed to obtain the HDR image and temporally consecutive HDR images are composed to obtain a raw HDR video. The raw HDR video obtained through material production may be referred to as a material.

Then, an HDR image/video production module of the image generation module may perform processing such as editing/color correction on the material, to obtain a final HDR video (that is, a master (work)). Then, a metadata generation module may generate metadata based on the final HDR video. T.35 information may be generated based on a part of the metadata (which may be referred to as metadata 1), country code, terminal provider code, and terminal provider oriented code. In addition, the other part of the metadata (which may be referred to as metadata 2) may be output to a video encoding module. The video encoding module performs video encoding on the HDR video and the metadata 2 to obtain a bitstream, and outputs the bitstream to an encapsulation module. Then, the encapsulation module may encapsulate the bitstream and the T.35 information into an image file format, and deliver/transmit the image file format over a network. After receiving the image file format, a decoder side may invoke a decapsulation module to decapsulate the image file format, to obtain the bitstream and the T.35 information. Then, a video decoding module may be invoked to decode the bitstream, to obtain a reconstructed HDR video and reconstructed metadata 2. Then, a display module may display the reconstructed HDR video based on the reconstructed metadata and metadata carried in the T.35 information.

For example, for example, the T.35 information may include dynamic metadata or dynamic metadata. For another example, the T.35 information may further include HDR display mapping information. It should be understood that other information may further be carried in the T.35 information. This is not limited in this application.

For example, the static metadata includes color space of a mastering display (Mastering Display), maximum luminance and minimum luminance of the mastering display, maximum luminance of a video sequence, and maximum average luminance of the video sequence, and is used for correct displaying via a reference display and restoration of a creator's intent in terms of functions. The static metadata is static data that does not change with time in the video sequence. For example, the maximum luminance of the video sequence is a maximum value of largest luminance of all frames.

For example, the dynamic metadata includes most of the static metadata and further includes metadata of tone mapping of a display device. In terms of functions, the most of the static metadata and the metadata are information closely related to processing processes such as displaying and tone mapping, for example, indicating selection of a tone mapping algorithm and parameters from a high dynamic range to a low dynamic range. In the video sequence, the dynamic metadata usually changes with time. For example, during scene switching, maximum luminance of an image, the maximum luminance of the mastering display, or the like also changes accordingly.

For example, this application may be applied to various image service scenarios (for example, a photo taken by a mobile phone, a cloud album, and an image transcoding service) and various video/audio service scenarios (for example, live broadcasting and on-demand broadcasting). This is not limited in embodiments of this application. In this application, an example in which multimedia is an image is used for description.

The following describes a process of encapsulating the T.35 information into the image file format.

First, the T.35 information and a location of the T.35 information in the image file format may be defined according to a specification/regulation of the image file format.

For example, the image file format may include but is not limited to JPEG, WebP, PNG, HEIF, AVIF, JXL, and the like. This is not limited in this application.

For example, in this application, a user-defined box (Box) may be added based on an existing image file format, the added box may be used to store the T.35 information, and a location of the added box is defined. To distinguish the added box from an existing box in the existing image file format, the added box may be referred to as a first box (in some scenarios, the added box may also be referred to as a T35 box (which may be represented by four characters "it35", and may be understood as that "it35" represents a box carrying the T.35 information), or another name. This is not limited in this application).

For example, a box is a general mechanism used to organize and store data, so that a file can contain multiple types of information in a flexible manner. A hierarchy and content of the box are defined in corresponding standard specifications to ensure correct parsing and processing of the file.

In this application, an example in which the image file format is HEIF is used for description.

Some syntaxes in the HEIF are first explained as follows:
Box (box): is an object-oriented building block defined by a unique type identifier and length.
Container box (container box): only aims to contain and combine a group of related boxes.
Item (item): is data that does not require timed processing, and is relative to sample data.
Property (property): is an attribute related to an item.
Sample (sample): is all data associated with a single time point. In other words, the sample is dynamic data.
Track (track): is a timed sequence of related samples (Samples) in an ISO base media file. For multimedia, the track corresponds to a sequence of images or sampled audios. For a hint track, the track corresponds to a streaming media channel.
Sample grouping (sample grouping): is a process of allocating each sample in a track to a sample group (Sample group) according to a grouping standard.

It should be noted that, in the HEIF, consecutive or timed media or metadata streams form a track (Track), and static media or metadata is stored as an item (item).

For definitions of various syntaxes in the HEIF, refer to the second version of ISO/IEC 23008-12:2022. Details are not described herein again.

For example, the HEIF has the following basic designs:
1. A still image is stored as an item. Generally, an image item is independently encoded and does not depend on any other item in decoding. If there is a predictive encoded image item with an encoding dependency, the image is explicitly indicated. Any quantity of image items can be included in a same file.
2. An image sequence is stored as a track. The image sequence track can be indicated to be displayed in a timed sequence (video or burst animation) or in an untimed manner, for example, displayed as an image gallery. When there is an encoding dependency between images, image items can be replaced with an image sequence track.

Each static element in an HEIF file is an item. For example, an "item" is data that does not require timed processing, and corresponds to (time-related) sample data; and a description of the item is defined by a box included in a MetaBox. (data that does not require timed processing, as opposed to sample data, and is described by the Boxes contained in a MetaBox)

For items, the HEIF file may include a coded item, for example, an image encoded through HEVC. The HEIF may also include a derived item, for example, an image overlay (image overlay). The HEIF may also include a metadata item, for example, EXIF information.

Each item may also have one or more properties (Properties) related to the item.

There are structures between items and between items and their properties for association.

For example, the HEIF specifies a box (Box) structure format from which a codecspecific image format can be derived.

For example, in the HEIF, a box is of a data structure, and is used to organize and store information in a file. A box is of a hierarchical structure, and each box has a unique identifier and length. The box can include other boxes to form a nested structure. Different types of boxes are used to store different types of information, such as image data, metadata, and configuration information.

Structurally, boxes can be classified into a full box and a container box. The container box can be nested with a box, but the full box can include only specific defined content and cannot be nested with a box.

In terms of content, boxes can be classified into the following types based on content stored in the boxes:
a box for describing a file type and compatibility: a FileTypeBox (ftyp) (which may also be referred to as a file type box);
a box for storing metadata of multimedia: a MetaBox (meta) (which may also be referred to as a metadata box);
a box for storing image data: a MediaDataBox (mdat) (which may also be referred to as a media data box);
a box for storing an image sequence: a MovieBox (moov) (which may also be referred to as a stream data box);
a box for storing item information, for example, an item Information Box (iinf) (which may also be referred to as an image information box);
a box for storing an item information entry, for example, an item Information Entry Box (infe) (which may also be referred to as an item information entry box);
a box for storing an item property, for example, an item Property Container Box (ipco) (item property container box);
a box for storing item property association information, for example, an item Property Association Box (ipma) (which may also be referred to as an item property association box);
a box for storing a sample (Sample), for example, a Track Box (track box);
a box for storing a sample entry (Sample Entry), for example, a SampleDescriptionBox (stsd);
a box for storing a property for describing a sample group (Sample Group), for example, a Sample Group Description Box (sgpd) (which may also be referred to as a sample group description box);
a box for storing timed metadata, for example, a timed metadata Track Box (timed metadata track box); and
a box for storing a timed metadata entry, for example, a metadata Sample Entry Box (metadata sample entry box).

The ftyp Box, the meta Box, the mdat Box, and the moov Box are four Boxes at a top level of the HEIF. The ftyp Box and the mdat Box are Full Boxes, and the meta Box and the moov Box are Container Boxes. It should be noted that the moov Box is an optional Box in the HEIF.

For example, the item Information Box (iinf), the item Information Entry Box (infe), the item Property Container Box (ipco), the item Property Association Box (ipma), and the item Location Box (iloc) are nested in the meta Box.

For example, the SampleDescriptionBox (stsd) and the Sample Group Description Box (sgpd) are nested in the Track Box (track box). The metadata Sample Entry Box (metadata sample entry box) is nested in the timed metadata Track Box (timed metadata track box). The Track Box (track box) and the timed metadata Track Box (timed metadata track box) are nested in the moov Box.

For example, a simplified hierarchical structure of the HEIF may be as follows:

### Structure 1:

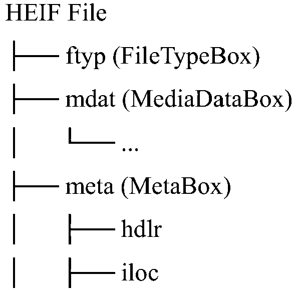

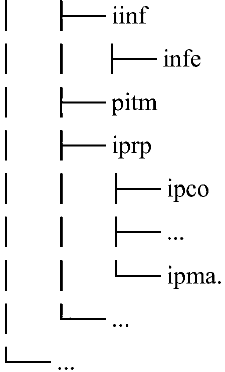

For example, a simplified hierarchical structure of the HEIF may be as follows:

### Structure 2:

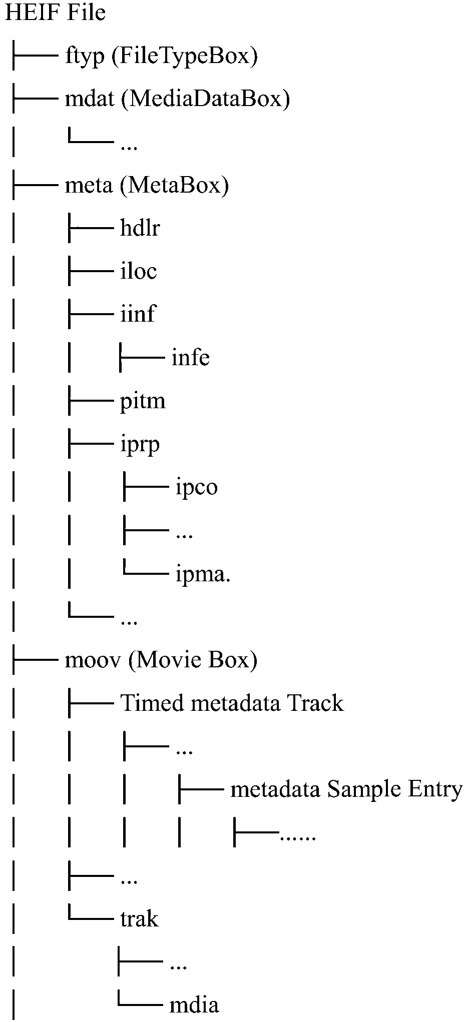

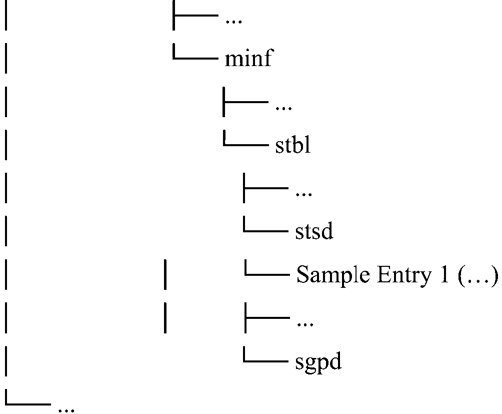

It should be understood that the structure 1 and the structure 2 are merely examples of the hierarchical structure of the HEIF. The hierarchical structure of the HEIF in this application may include more or fewer boxes or more or fewer levels than those shown in the structure 1 and the structure 2. This is not limited in this application. In addition, a location of each box in the hierarchical structure of the HEIF is not limited in this application.

For example, it35 may be nested in any existing box of the HEIF.

For example, it35 may be nested in any existing box at any level of the HEIF.

For example, a definition of it35 and a definition of a location of it35 in the HEIF may be as follows:

Definition manner 1: A user-defined metadata element is added to the image file format, and is referred to as "T35Information". The element may be defined as an item (item) (that is, the T.35 information is defined as an item (item)), for example, a metadata item (metadata item). A type of the metadata item may be defined as a new value "it35". (item_type='it35').

### Definition manner 1 (1):

The T35Information (that is, it35) may have a syntax similar to the following:

### Syntax 1:

```
         aligned(8) class T35Information {
              bit(8) itu_t_t35_country_code;
              if(itu_t_135_country_code == 0xFF)
              {
                 bit(8) itu_t_t35_country_code_extension_byte;
              }
              bit(8) itu_t_t35_payload[];
          }
```

For example, a semantic (Semantics) explanation of the syntax 1 may be as follows:
itu_t_t35_country_code should be one byte, and its value is specified in Rec. ITU-T T.35 Annex A as country code, or is a country code extension value 0xFF.

If present, itu_t_t35_country_code_extension_byte should be one byte, and its value is specified in Rec. ITU-T T.35 Annex B as country code.

itu_t_ t35_payload should be a payload including data registered according to a specification of Rec. ITU-T T.35 (which may include the metadata of the multimedia, for example, dynamic metadata of an HDR image or static metadata of an HDR image).

Terminal provider code and terminal provider oriented code in ITU-T T.35 should be included in a 1^{st} byte or more bytes of itu_t_t35_payload, and a format is specified by a management organization that issues the terminal provider code. Any remaining itu_t_t35_payload data should be data that has a specific syntax and semantics and that is specified by an entity identified by the country code, the terminal provider code, and terminal provider oriented code in ITU-T T.35.

A length of itu_t_t35_payload is a quantity of remaining bytes in the item.

For example, in the HEIF, when the T.35 information is defined as a metadata item, and a syntax of a T.35 Box is the syntax 1, a possible simplified hierarchical structure of the HEIF is provided based on the "structure 1".

### Structure 3:

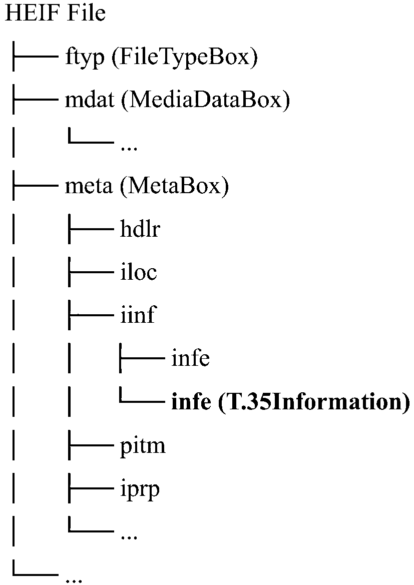

A difference between the structure 3 and the structure 1 is marked in the structure 3 in bold.

Referring to the structure 3, the T.35 Box is an infe box, and the T.35 Box may be nested in the iinf.

### Definition manner 1 (2):

The T35Information (that is, it35) may have a syntax similar to the following:

### Syntax 2:

```
         aligned(8) class T35Information {
              bit(8) itu_t_t35_country_code;
              if(itu_t_t35_country_code == 0xFF)
              {
                 bit(8) itu_t_t35_country_code_extension_byte;
          }
```

It should be noted that, in the definition manner 1 (2), a data block T35DataBlock further needs to be defined, to store the payload (payload) of T.35. The T35DataBlock may have a syntax similar to the following:

### Syntax 3:

```
         aligned(8) class T35DataBlock() {
              bit(8) itu_t_ t35_payload [];
          }
```

For semantic explanations of the syntax 2 and the syntax 3, refer to the semantic explanation of the syntax 1. Details are not described herein again.

For example, in the HEIF, when the T.35 information is defined as a metadata item, and a syntax of a T.35 Box is the syntax 2, a possible simplified hierarchical structure of the HEIF is provided based on the "structure 1".

### Structure 4:

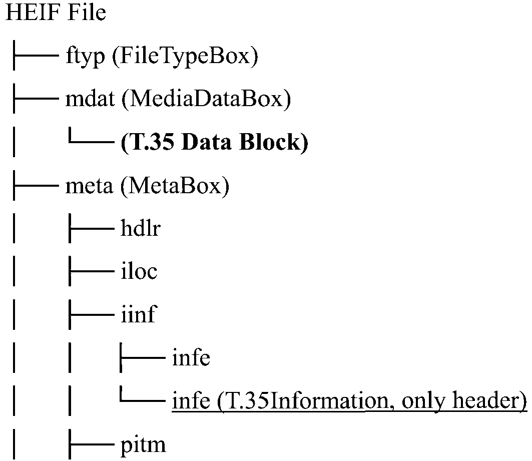

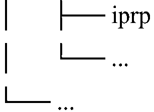

The T.35 information includes a header (header information) and a payload (payload). The header includes the country code, the terminal provider code, and the terminal provider oriented code. The payload may include the metadata of the multimedia, for example, the dynamic metadata of the HDR image or the static metadata of the HDR image.

Referring to the structure 4, the T.35 Box (including only the header) is an infe box, the T.35 Box may be nested in the iinf, and the payload may be nested in the mdat Box.

Definition manner 2: A user-defined metadata element is added to the image file format, and is referred to as "T35Information". The element may be defined as an item property (item property) (that is, the T.35 information is defined as an item property (item property)), for example, the item property may belong to and be associated with an item (image). In the HEIF, an image is also an item, for example, a derived item or a coded image item. The items can have properties. The defined property can be specified in a property box (for example, this T.35 property is contained in a container box itemPropertyContainerBox) and assigned to an image. Each item property is a box (Box) or a full box (FullBox). A box type (Boxtype) of the item property specifies a type of the property. Therefore, a type of the metadata element (item property) can be defined as a new value "it35". (Box_type='it35'). In addition, according to the definition of the property, the item property Box should be located in the container itemPropertyContainerBox.

A definition of a T.35 Box may be as follows:

| | |
|---|---|
| Box Type: | 'it35' |
| Property type: | Descriptive item property |
| Container: | itemPropertyContainerBox |

For example, the T35Information (that is, it35) may have a syntax similar to the following:

### Syntax 3:

```
         aligned(8) class T35InformationProperty extends itemProperty('it35') {
              bit(8) itu_t_t35_country_code;
              if(itu_t_t35_country_code == 0xFF)
              {
                 bit(8) itu_t_t35_country_code_extension_byte;
              }
              bit(8) itu_t_t35_payload[];
          }
```

For a semantic explanation of the syntax 3, refer to the semantic explanation of the syntax 1. Details are not described herein again.

For example, in the HEIF, when the T.35 information is defined as an item property, a possible simplified hierarchical structure of the HEIF is provided based on the "structure 1".

### Structure 5:

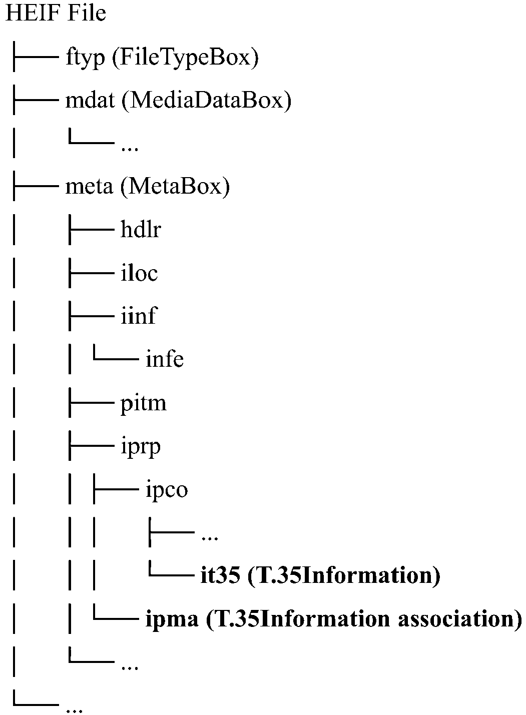

A structure difference between the structure 5 and the structure 1 is marked in the structure 5 in bold.

In other words, a T.35 box is nested in the ipco. In addition, information about association between the T.35 information and a corresponding item is added to the ipma box.

Definition manner 3: A user-defined element is added to the image file format, and the element is defined as a sample entry (Sample Entry). That is, the T.35 information is defined as a sample entry (Sample Entry).

The Sample Entry is in a box (Box) type, and includes information for describing a sample. Each Sample Entry corresponds to a sample (sample) in a track (Track). This box is mainly used to describe a format and a coding scheme of media data.

Because the Sample Entry describes different data formats and coding schemes, the T.35 information defined herein is codec-independent.

Because the Sample Entry is a box, the sample entry may be named a "T35InformationBox". A box type of a Sample Entry Box of the Sample Entry is defined as a new value "it35". (Box_type='it35'). The Sample Entry may be contained in the SampleDescriptionBox ('stsd').

For example, the T35InformationBox (that is, it35) may have a syntax similar to the following:

### Syntax 4:

```
         aligned(8) class T35InformationBox extends FullBox('it35', 0, 0) {
              bit(8) itu_t_t35_country_code;
              if(itu_t_t35_country_code == 0xFF)
              {
                 bit(8) itu_t_t35_country_code_extension_byte;
              }
              bit(8) itu_t_t35_payload[];
          }
```

For a semantic explanation of the syntax 4, refer to the semantic explanation of the syntax 1. Details are not described herein again.

For example, in the HEIF, when the T.35 information is defined as a Sample Entry, a possible simplified hierarchical structure of the HEIF is provided based on the "structure 2".

### Structure 6:

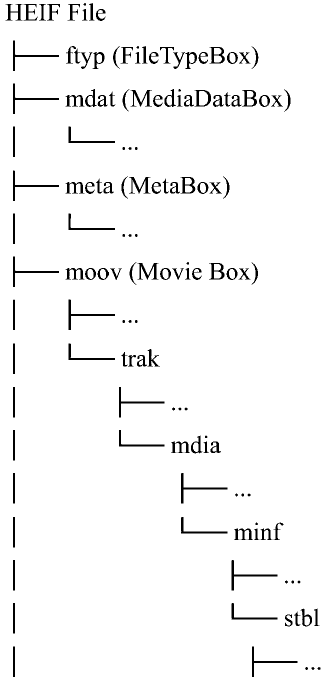

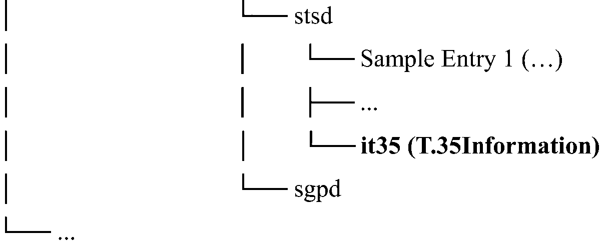

A difference between the structure 6 and the structure 2 is marked in the structure 6 in bold.

In other words, a T.35 box is nested in the stsd.

For example, for the structure 6, when there is an image sequence, a Track (track) needs to be defined for storage. In this case, the stsd at the end level is available. The stsd contains codec information like hvc1. In this solution, it35 is contained. Therefore, the metadata can be codec-independent (in a parallel box).

It should be noted that, in the solution 3, it35 (Sample Entry) is independent of another Sample Entry box, and a codec is not limited to achieve applicability.

It should be noted that the solution 1, the solution 2, and the solution 3 are applicable to T.35 information carrying static metadata.

Definition manner 4: A user-defined element is added to the image file format, and the element is defined as a sample group entry (Sample Group Entry). That is, T.35 is defined as a sample group entry (Sample Group Entry).

T.35 information defined by the Sample Group Entry may carry dynamic metadata. Because the Sample Group Entry is a box, this sample entry can be named a "T35SampleGroupEntry". The sample group box is defined as a grouping type (grouping type) of a new value "it35" (grouping_type='it35'). The Sample Group Entry may be contained in the SampleGroupDescriptionBox ('sgpd'), and a sample group may be associated with a track.

Definition manner 4 (1): All data (including a header and a payload) carried in the T.35 information is stored in the SampleGroupDescriptionBox ('sgpd') instead of a sample (that is, a Sample Entry in the stsd).

For example, each sample (Sample) in the track (Track) may be associated with zero or more sample group descriptions (Sample Group Descriptions), and each description defines a different type of T.35 information record. Same T.35 information is applicable to different samples.

grouping_type='i135' is defined as the grouping type for T.35 metadata.

A SampleTableBox ('stbl') or a TrackFragmentBox ('traf') of the track may include zero or more SampleToGroupBoxes ('sbgp') or CompactSampleToGroupBoxes ('csgp') having grouping _type='it35' and different grouping_type_parameter entries.

For example, the T35SampleGroupEntry (that is, it35) may have the following syntax:

### Syntax 5:

```
         class T35SampleGroupEntry extends SampleGroupDescriptionEntry('it35') {
              bit(8) itu_t_t35_country_code;
              if(itu_t_t35_country_code == 0xFF)
              {
                 bit(8) itu_t_t35_country_code_extension_byte;
              }
              bit(8) itu_t_t35_payload[];
          }
```

For a semantic explanation of the syntax 5, refer to the semantic explanation of the syntax 1. Details are not described herein again.

For example, in the HEIF, when the T.35 information is defined as the SampleGroupEntry, a possible simplified hierarchical structure of the HEIF is provided based on the "structure 2".

### Structure 7:

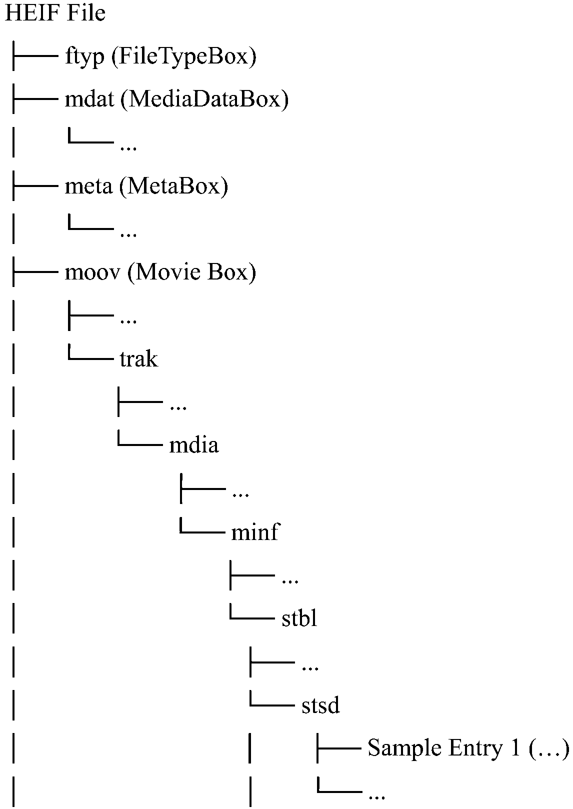

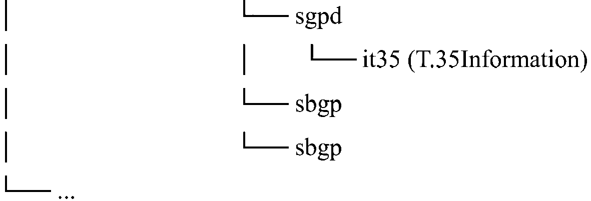

In other words, a T.35 box is nested in the sgpd.

All entries in the SampleToGroupBox or CompactSampleToGroupBox with the same grouping _type_parameter value should be mapped to a same type of T.35 information. This means that T.35 sample group entries should have at least same country code, terminal provider code, and terminal provider oriented code in ITU-T T.35, a same T.35-specific type, and same version information (if applicable).

For example, five pieces of T.35 information with IDs 1, 2, 3, 4, and 5 are contained in the sgpd, and are respectively from an HDR Vivid, an HDR Vivid, a Dolby Vision, a Dolby Vision, and a Dolby Vision.

The definition manner 4 (1) can reduce redundancy of storing same metadata in all samples, and is very useful when metadata is not frequently carried in the T.35 information and a size of a MovieBox causes no problem.

Definition manner 4 (2): All payloads carried in T.35 information are stored in samples, and the SampleGroupDescriptionBox indicates only a header of the T.35 information. The T.35 information is carried in the sample. A sample grouping (sample grouping) mechanism is used to identify a sample that holds specific T.35 information. This method allows very frequent processing of T.35 metadata (a large quantity of pieces of same metadata).

Each sample in a track may be associated with zero or more sample group descriptions, and each description defines a different type of T.35 information record. Same T.35 information is applicable to different samples.

grouping_type='it35' is defined as the grouping type for T.35 metadata.

A SampleTableBox or a TrackFregmentBox of the track may include zero or more SampleToGroupBoxes or CompactSampleToGroupBoxes having grouping_type='it35'.

Each sample group description should record exactly one type of T.35 information. For example, sample group descriptions should be mapped to T.35 sample group entries having at least same country code, terminal provider code, and terminal provider direction code in ITU-T T.35, and a same T.35 type and version (if applicable).

The T35SampleGroupEntry (that is, it35) in the definition manner 4 (2) may have the following syntax:

### Syntax 6:

```
         class T35SampleGroupEntry extends SampleGroupDescriptionEntry('it35') {
              bit(8) itu_t_t35_country_code;
              if(itu_t_t35_country_code == 0xFF)
              {
                 bit(8) itu_t_t35_country_code_extension_byte;
              }
              bit(8) itu_t_135_header[];
          }
```

For example, in the HEIF, when the T.35 information is defined as the SampleGroupEntry, a possible simplified hierarchical structure of the HEIF is provided based on the "structure 2".

### Structure 8:

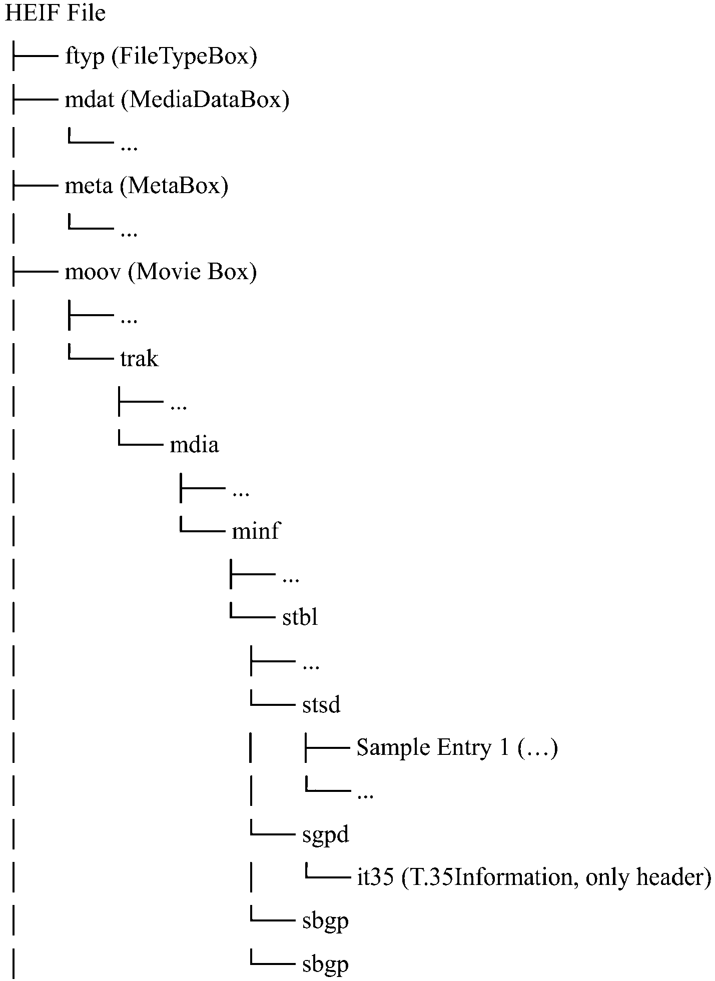

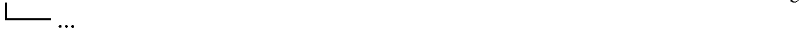

For example, a 1^{st} sbgp includes two sub-idxes, which point to ID=1 and ID=2 in the sgpd, and grouping_type_parameter=0 (in this case, HDR Vivids are grouped together).

A 2^{nd} sbgp includes three sub-idxes, which point to ID=3, ID=4, and ID=5 in the sgpd, and grouping_type_parameter=1 (in this case, three Dolby Visions are grouped together).

That is, in the definition manner 4 (1), both the header and the payload of the T.35 information are contained in the Sample Group Description Box. In the definition manner 4 (2), only the header of the file header T.35 information is stored in the Sample Group Description Box, and the payload of the T.35 information is stored in a sample (that is, a Sample Entry in the stsd).

Definition manner 5: A timed metadata track (Timed metadata Track) may be used to store the dynamic metadata carried in the T.35 information, for example, HDR dynamic tone mapping metadata or movie granularity metadata that changes per frame; and may also be used to less frequently store T.35 metadata (a small quantity of pieces of same metadata). Sample duration of T.35 may be set to cover a plurality of samples of a referenced track, and these samples belong to the track referenced by the T.35 information.

When the timed metadata track is used, the referenced track should not include a T35InformationBox in sample entries having same country code, terminal provider code, and terminal provider oriented code in ITU-T T.35.

For example, the T.35 information may be defined as a sample entry (Sample Entry), named a "T35InfoSampleEntry" definition, and may be identified by code 'it35'.

For example, a sample entry (Sample Entry) of the T.35 information should contain a T35InfoConfigurationBox, which describes the T.35 information present in each sample, and may be represented by the type 'T35C'.

For example, T.35 may have the following syntax:

### Syntax 7:

```
         aligned(8) class T35InfoSampleEntry() extends MetadataSampleEntry ('it35')
          {
              T35CommonHeaderInfoBox t35_common();
          }
 
```

For example, the T35CommonHeaderInfoBox may have the following syntax:

### Syntax 8:

```
         aligned(8) class T35CommonHeaderInfoBox extends FullBox('it35', 0, 0)
          {
              bit(8) itu_t_t35_country_code;
              if(itu_t_t35_country_code == 0xFF)
              {
                 bit(8) itu_t_t35_country_code_extension_byte;
              }
              bit(8) itu_t_t35_common[];
          }
```

For example, the T35InfoSample may have the following syntax:

### Syntax 9:

```
         aligned(8) class T35InfoSample()
          {
              bit(8) t35_remaining_payload[];
          }
```

Semantic explanations of the syntax 7 to the syntax 9 are as follows:
t35_common is common T.35 information for all samples related to this sample entry. t35_common should include the country code, the terminal provider code, and the terminal provider oriented code in ITU-T T.35. t35_common should also include a part of ITU-T T.35 information of a specified information version. In all the samples related to this sample entry, t35_common may also include all other common data following the terminal provider oriented code.
itu_t_t35_country_code should be one byte, and its value is specified in the country code specification in ITU-T T.35 Annex A, or is a country code extension value 0xFF.

If present, itu_t_t35_country_code_extension_byte should be one byte, and its value is specified in the country code specification in ITU-T T.35 Annex B.

itu_t_t35_common should be the payload including the terminal provider code and the terminal provider oriented code in ITU-T T.35, as specified in the ITU-T T.35 specification. itu_t_135_common should also include a part of the version of the ITU-T T.35 information. In all the samples related to this sample entry, itu_t_135_common may also include all common data following the terminal provider oriented code.

t35_remaining_payload should be the remaining payload, and includes data registered according to the country code, the terminal provider code, and the terminal provider oriented code specifications in ITU-T T.35 in the T35InfoSampleEntry. Complete ITU-T T.35 information is obtained by concatenating data from the T35CommonHeaderInfoBox with data from each T35InfoSample.

For example, when the T.35 information is defined as a sample entry, a possible simplified hierarchical structure of the HEIF is provided based on the "structure 2".

### Structure 9:

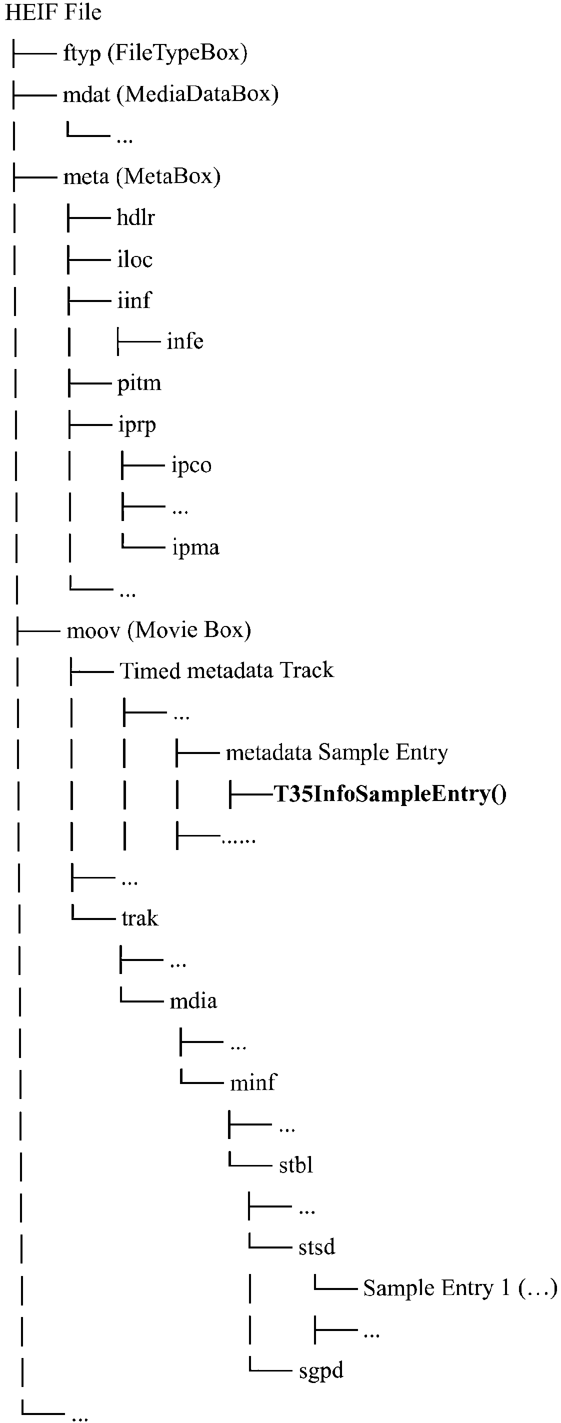

Similarly, in this application, the T35 Box and a location of the T35 Box may further be defined in a JPEG universal metadata box format (JUMBF JPEG Universal Metadata Box Format, JUMBF). For example, for the JUMBF, refer to the Part 5 document of JPEG Systems. The Part 5 of the JPEG Systems defines a framework for JPEG standards, to help the JPEG add common metadata and allow future extensions (extensions). The extensions may be, for example, metadata, enhanced images, or other elements in addition to a base image. (specifies a framework for JPEG standards to add universal metadata allowing future extensions using metadata, supplementary images, or other elements in addition to the base image). For example, the JUMBF also defines a basic concept of a box structure. Therefore, in the JUMBF, the T.35 information may also be defined as a box, and the location of the T35 box is defined according to the JUMBF specification (that is, the T35 box is set at a proper location specified by the JUMBF). Details are not described herein again.

In this way, the T.35 information can be encapsulated into the image file format (or referred to as an image file) according to the image file format in which the definition of the T.35 information and the definition of the location of the T.35 information are added. For details, refer to the following data encapsulation process 200.

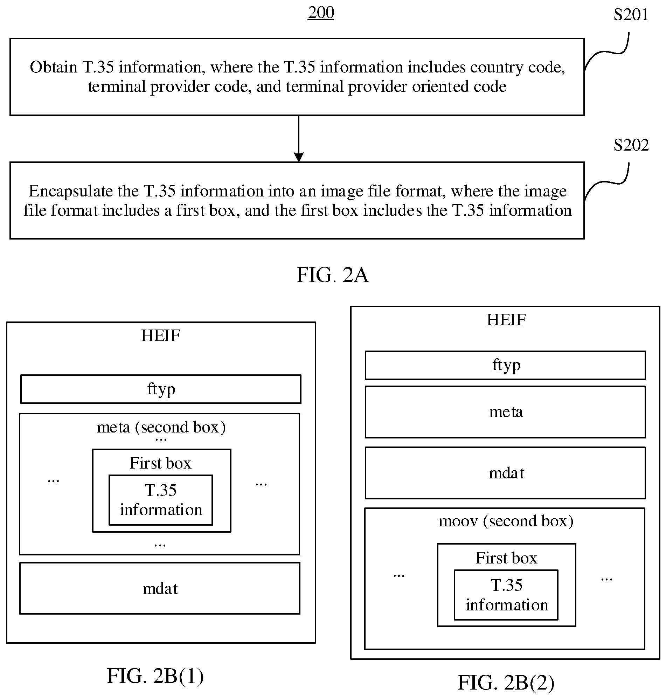

FIG. 2A illustrates a diagram of a data encapsulation process 200.

S201: Obtain T.35 information, where the T.35 information includes country code, terminal provider code, and terminal provider oriented code.

For example, the T.35 information may further carry metadata of multimedia. It should be understood that the metadata of the multimedia is information that is optionally carried in the T.35 information, and the country code, the terminal provider code, and the terminal provider oriented code are mandatory information carried in the T.35 information.

S202: Encapsulate the T.35 information into an image file format, where the image file format includes a first box, and the first box includes the T.35 information.

For example, the T.35 information may be encapsulated into the image file format in any one of the definition manner 1 to the definition manner 5.

For example, it can be learned from any one of the definition manner 1 to the definition manner 5 that, the image file format obtained in S202 may include the first box, and the first box includes the T.35 information.

For example, when the image file format obtained in S202 is an HEIF file, it can be learned from any one of the definition manner 1 (1) and the definition manner 2 to the definition manner 5 that, the image file format obtained in S202 may further include a second box, the second box may be a metadata box or a stream data box, and the first box may be nested in the second box, as shown in FIG. 2B(1) and FIG. 2B(2).

For example, the second box includes a plurality of third boxes, there is a hierarchical relationship between the plurality of third boxes, and the first box is nested in a third box at any level.

In other words, when the second box is the metadata box, the metadata box may include the plurality of third boxes, and the third boxes include but are not limited to an item Information Box (iinf Box), an item Information Entry Box (infe Box), an item Property Container Box (ipco Box), an item Property Association Box (ipma Box), an item Location Box (iloc Box), and the like. The hierarchical relationship between the plurality of third boxes may be shown in a structure 1. The first box may be nested in a third box at any level (as shown in a structure 3, a structure 4, or a structure 5).

When the second box is the stream data box, the stream data box may include the plurality of third boxes, and the third boxes include but are not limited to a SampleDescriptionBox (stsd Box), a Sample Group Description Box (sgpd Box), a metadata Sample Entry Box, a timed metadata Track Box, a Track Box, and the like. The hierarchical relationship between the plurality of third boxes may be shown in a structure 2. The first box may be nested in a third box at any level (as shown in a structure 6, a structure 7, a structure 8, or a structure 9).

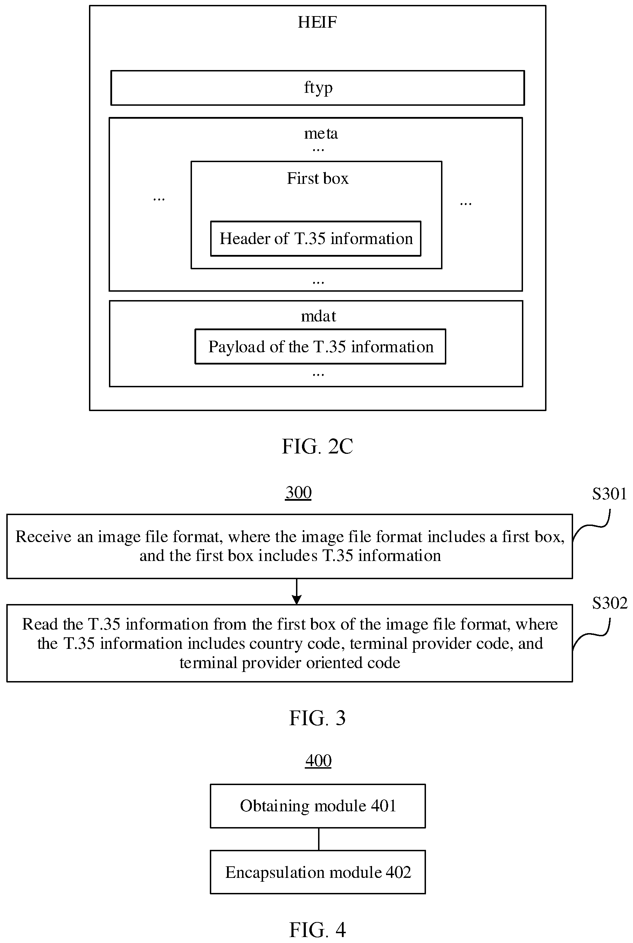

For example, when a manner of defining a T.35 box and a location of the T.35 box in the image file format is shown as the definition manner 1 (2), the image file format obtained in S202 further includes an item identifier and a media box, the item identifier indicates that the T.35 information is an item, the first box includes header information of the T.35 information, the media box includes a payload of the T.35 information, and the first box is nested in an image information box, as shown in FIG. 2C.

For example, when a manner of defining a T.35 box and a location of the T.35 box in the image file format is shown as the definition manner 1 (1), the T.35 information is an item, the first box is nested in an image information box, and the first box is an item information entry box.

For example, when a manner of defining a T.35 box and a location of the T.35 box in the image file format is shown as the definition manner 2, the T.35 information is an item property, the first box is nested in an item property container box, and an item property association box includes information about association between the T.35 information and a corresponding item.

For example, when a manner of defining a T.35 box and a location of the T.35 box in the image file format is shown as the definition manner 3, the T.35 information is a sample entry, and the first box is nested in a sample description box.

For example, when a manner of defining a T.35 box and a location of the T.35 box in the image file format is shown as the definition manner 4 (1), the T.35 information is a sample group entry, and the first box is nested in a sample group description box.

For example, when a manner of defining a T.35 box and a location of the T.35 box in the image file format is shown as the definition manner 4 (2), the T.35 information is a sample entry, the first box includes header information of the T.35 information, the first box is nested in a sample group description box, and the sample description box includes a payload of the T.35 information.

For example, when a manner of defining a T.35 box and a location of the T.35 box in the image file format is shown as the definition manner 5, the T.35 information is a sample entry, and the first box is nested in a metadata sample entry box.

For example, encoded multimedia data may further be obtained, and the encoded multimedia data is encapsulated into the image file format, where the image file format further includes the media box or the stream data box, and the media box or the stream data box includes the encoded multimedia data.

FIG. 3 illustrates a diagram of a data obtaining process 300.

S301: Receive an image file format, where the image file format includes a first box, and the first box includes T.35 information.

S302: Read the T.35 information from the first box of the image file format, where the T.35 information includes country code, terminal provider code, and terminal provider oriented code.

For example, the T.35 information may be read from the first box of the image file format.

For example, when a manner of defining a T.35 box and a location of the T.35 box in the image file format is shown as the definition manner 1 (2), an item identifier may be read from the image file format, a payload of the T.35 information may be read from a media box based on the item identifier, and header information of the T.35 information may be read from the first box nested in an image information box.

For example, when a manner of defining a T.35 box and a location of the T.35 box in the image file format is shown as the definition manner 1 (1), the T.35 information may be read from the first box nested in an image information box.

For example, when a manner of defining a T.35 box and a location of the T.35 box in the image file format is shown as the definition manner 2, the T.35 information may be read from the first box nested in an item property container box, information about association between the T.35 information and a corresponding item may be read from an item property association box, and the item associated with the T.35 information is determined.

For example, when a manner of defining a T.35 box and a location of the T.35 box in the image file format is shown as the definition manner 3, the T.35 information may be read from the first box nested in a sample description box.

For example, when a manner of defining a T.35 box and a location of the T.35 box in the image file format is shown as the definition manner 4 (1), the T.35 information may be read from the first box nested in a sample group description box.

For example, when a manner of defining a T.35 box and a location of the T.35 box in the image file format is shown as the definition manner 4 (2), header information of the T.35 information may be read from the first box nested in a sample group description box, and a payload of the T.35 information is included in a sample description box.

For example, when a manner of defining a T.35 box and a location of the T.35 box in the image file format is shown as the definition manner 5, the T.35 information may be read from the first box nested in a metadata sample entry box.

In addition, encoded multimedia data may further be read from the media box or a stream data box further included in the image file format. Next, the encoded multimedia data is decoded to obtain reconstructed multimedia data. Then, the reconstructed multimedia data may be played based on the T.35 information.

For example, an embodiment of this application further provides an image file format. The image file format may be obtained through encapsulation according to the data encapsulation process 200.

FIG. 4 illustrates a diagram of a data encapsulation apparatus 400. The data encapsulation apparatus 400 may be configured to perform the method in the foregoing embodiment. Therefore, for beneficial effect that can be achieved, refer to beneficial effect in the corresponding method provided above. Details are not described herein again.

For example, the data encapsulation apparatus 400 may include:
an obtaining module 401, configured to obtain T.35 information, where the T.35 information includes country code, terminal provider code, and terminal provider oriented code; and
an encapsulation module 402, configured to encapsulate the T.35 information into an image file format, where the image file format includes a first box, and the first box includes the T.35 information.

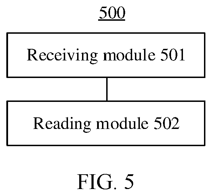

FIG. 5 illustrates a diagram of a data reading apparatus 500. The data encapsulation apparatus 500 may be configured to perform the method in the foregoing embodiment. Therefore, for beneficial effect that can be achieved, refer to beneficial effect in the corresponding method provided above. Details are not described herein again.

For example, the data encapsulation apparatus 500 may include:
a receiving module 501, configured to receive an image file format, where the image file format includes a first box, and the first box includes T.35 information; and
a reading module 502, configured to read the T.35 information from the first box of the image file format, where the T.35 information includes country code, terminal provider code, and terminal provider oriented code.

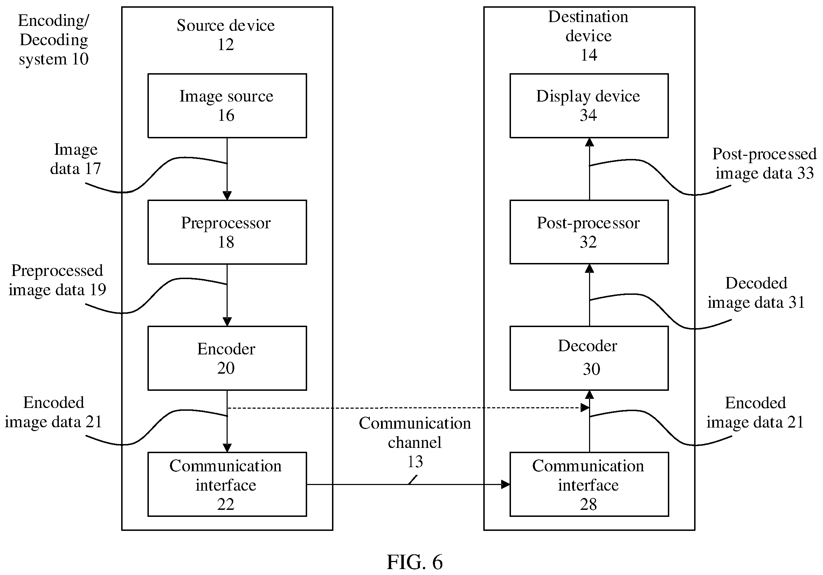

The following describes, with reference to FIG. 6, an encoding/decoding system to which this application is applied. FIG. 6 is a block diagram of an encoding/decoding system to which an embodiment of this application is applied, for example, a video encoding/decoding system 10 (or an encoding/decoding system 10 for short) to which technologies of this application may be applied. A video encoder 20 (or an encoder 20 for short) and a video decoder 30 (or a decoder 30 for short) of the video encoding/decoding system 10 represent devices that may be configured to perform technologies based on various examples described in this application.

As shown in FIG. 6, the encoding/decoding system 10 includes a source device 12. The source device 12 is configured to provide encoded data 21 such as an encoded image to a destination device 14 for decoding the encoded data.

The source device 12 includes the encoder 20, and may optionally include an image source 16, an image preprocessor 18 (or a preprocessing unit), and a communication interface or communication unit 22.

The image source 16 may include or be any type of image capture device for capturing a real-world image and the like, and/or any type of image generation device, for example, a computer graphics processing unit for generating a computer animated image, or any type of device for obtaining and/or providing a real-world image, a computer generated image (for example, screen content, a virtual reality (virtual reality, VR) image) and/or any combination thereof (for example, an augmented reality (augmented reality, AR) image). The image source may be any type of memory or storage storing any of the foregoing images.

To distinguish processing performed by the preprocessor 18 or the preprocessing unit 18, an image or image data 17 may also be referred to as a raw image or raw image data 17.

The preprocessor 18 is configured to: receive the (raw) image data 17 and perform preprocessing on the image data 17, to obtain a preprocessed image 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to: receive the preprocessed image data 19 and provide encoded image data 21.

The communication interface 22 of the source device 12 may be configured to: receive the encoded image data 21 and transmit the encoded image data 21 (or any further processed version thereof) over a communication channel 13 to another device like the destination device 14 or any other device, for storage or direct reconstruction.

The destination device 14 includes the decoder 30 (for example, the video decoder 30), and may optionally include a communication interface or communication unit 28, a post-processor 32 (or post-processing unit 32), and a display device 34.

The communication interface 28 of the destination device 14 is configured to: receive the encoded image data 21 (or any further processed version thereof) directly from the source device 12 or from any other source device like a storage device, for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any type of combination thereof.

For example, the communication interface 22 may be configured to encapsulate the encoded image data 21 into an appropriate format, for example, a packet, and/or process the encoded image data using any type of transmission encoding or processing for transmission via a communication link or communication network.

The communication interface 28, corresponding to the communication interface 22, may be configured to, for example, receive transmitted data and process the transmitted data through any type of corresponding transmission decoding or processing and/or decapsulating, to obtain the encoded image data 21.

Both the communication interface 22 and the communication interface 28 may be configured as unidirectional communication interfaces as indicated by an arrow for the communication channel 13 in FIG. 6 pointing from the source device 12 to the destination device 14, or bidirectional communication interfaces, and may be configured, for example, to send and receive messages, to set up a connection, and acknowledge and exchange any other information related to the communication link and/or data transmission, for example, encoded image data transmission.

The decoder 30 is configured to: receive the encoded image data 21, and provide decoded image data 31 or a decoded image 31.

The post-processor 32 of the destination device 14 is configured to perform post-processing on the decoded image data 31 (also referred to as reconstructed image data), for example, the decoded image 31, to obtain post-processed image data 33, for example, a post-processed image 33. Post-processing performed by the post-processing unit 32 may include, for example, color format conversion (for example, from YCbCr to RGB), color correction, trimming, or re-sampling, or any other processing, for example, for generating the decoded image data 31 displayed by the display device 34.

The display device 34 of the destination device 14 is configured to receive the post-processed image data 33, to display an image to a user, a viewer, or the like. The display device 34 may be or include any type of display for representing a reconstructed image, for example, an integrated or external display screen or display. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of other display.

Although FIG. 6 shows the source device 12 and the destination device 14 as separate devices, a device embodiment may alternatively include both the source device 12 and the destination device 14 or functions of both the source device 12 and the destination device 14, namely, the source device 12 or corresponding functions and the destination device 14 or corresponding functions. In such embodiments, the source device 12 or corresponding functions and the destination device 14 or corresponding functions may be implemented by the same hardware and/or software or by separate hardware and/or software or any combination thereof.

As will be apparent for the skilled person based on the description, existence and (exact) division into different units or functions in the source device 12 and/or the destination device 14 as shown in FIG. 6 may vary depending on an actual device and application.

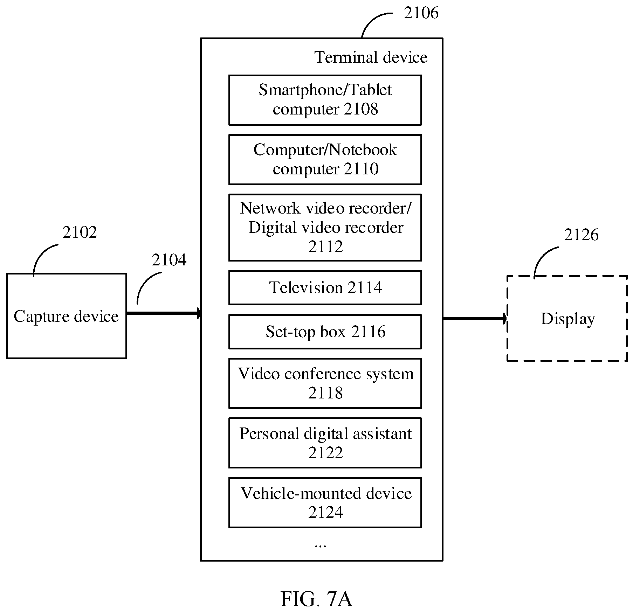

The following describes, with reference to FIG. 7A, a content supply system for a content delivery service to which this application is applied. FIG. 7A is a block diagram of a content supply system for implementing a content delivery service to which an embodiment of this application is applied. The content supply system 2100 includes a capture device 2102, a terminal device 2106, and a display 2126 (optional). The capture device 2102 communicates with the terminal device 2106 over a communication link 2104. The communication link may include the communication channel 13 described above. The communication link 2104 includes but is not limited to Wi-Fi, Ethernet, wired, wireless (3G/4G/5G), USB, or any type of combination thereof.

The capture device 2102 generates data, and may encode the data by using the encoding method shown in the foregoing embodiment. Alternatively, the capture device 2102 may deliver the data to a streaming media server (not shown in the figure), and the server encodes the data and transmits encoded data to the terminal device 2106. The capture device 2102 includes but is not limited to a camera, a smartphone or tablet computer, a computer or notebook computer, a video conference system, a PDA, a vehicle-mounted device, or any combination thereof. For example, the capture device 2102 may include the foregoing source device 12. When the data includes a video, a video encoder 20 of the capture device 2102 may actually perform video encoding processing. When the data includes an audio (namely, a voice), an audio encoder 20 of the capture device 2102 may actually perform audio encoding processing. For some practical scenarios, the capture device 2102 delivers encoded video data and encoded audio data by multiplexing the encoded video data and the encoded audio data together. For other practical scenarios, for example, in the video conference system, the encoded audio data and the encoded video data are not multiplexed. The capture device 2102 delivers the encoded audio data and the encoded video data to the terminal device 2106 separately.

The terminal device 2106 of the content supply system 2100 receives and regenerates encoded data. The terminal device 2106 may be a device with data receiving and restoring capabilities, for example, a smartphone or tablet computer 2108, a computer or laptop computer 2110, a network video recorder (network video recorder, NVR)/digital video recorder (digital video recorder, DVR) 2112, a television 2114, a set-top box (set-top box, STB) 2116, a video conference system 2118, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 of the terminal device is prioritized to perform video decoding processing. When the encoded data includes an audio, an audio decoder of the terminal device is prioritized to perform audio decoding processing. The terminal device 2106 may be a video play application, a streaming media play application, a streaming media play platform, a live streaming platform, or the like that runs on the terminal device.

For a terminal device with a display, for example, the smartphone or tablet computer 2108, the computer or laptop computer 2110, the NVR/DVR 2112, the television 2114, the PDA 2122, or the vehicle-mounted device 2124, the terminal device can send decoded data to the respective display. For a terminal device without a display, for example, the STB 2116 or the video conference system 3118, the device is connected to the external display 2126, to receive and display the decoded data.

When each device in this system performs encoding or decoding, the image encoding device or the image decoding device, as shown in the foregoing embodiments, can be used.

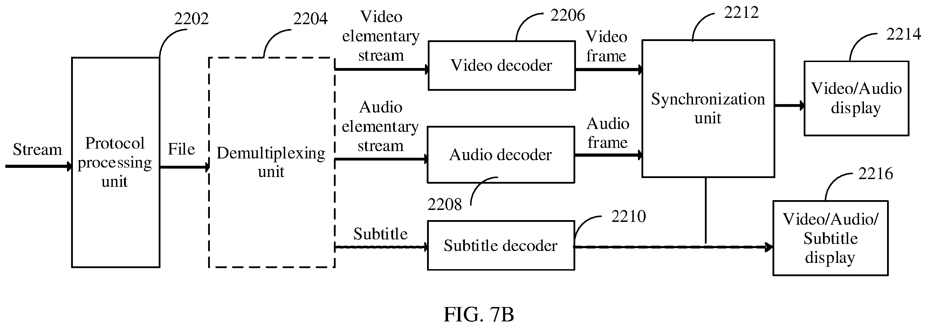

FIG. 7B is a diagram of an example of a structure of the terminal device 2106 in FIG. 7A. After the terminal device 2106 receives a bitstream from the capture device 2102, a protocol processing unit 2202 analyzes a transmission protocol of the bitstream. The protocol includes but is not limited to a real-time streaming protocol (Real-time Streaming Protocol, RTSP), a hypertext transfer protocol (Hypertext Transfer Protocol, HTTP), an HTTP live streaming protocol (HTTP Live streaming protocol, HLS), an MPEG dynamic adaptive streaming over HTTP (MPEG Dynamic Adaptive Streaming over HTTP, MPEG-DASH), a real-time transport protocol (Real-time Transport protocol, RTP), a real-time messaging protocol (Real-time Messaging Protocol, RTMP), or any combination thereof.

After processing the stream, the protocol processing unit 2202 generates a stream file. The file is output to a demultiplexing unit 2204. The demultiplexing unit 2204 can separate multiplexed data into encoded audio data and encoded video data. As described above, for other practical scenarios, for example, in the video conference system, the encoded audio data and the encoded video data are not multiplexed. In this case, encoded data is transmitted to a video decoder 3206 and an audio decoder 2208 without through the demultiplexing unit 2204.

A video elementary stream (ES), an audio ES, and an optional subtitle are generated through demultiplexing processing. The video decoder 2206 that includes the video decoder 30 as described in the foregoing embodiments decodes the video ES by using the decoding method as shown in the foregoing embodiments, to generate a video frame, and sends this data to a synchronization unit 2212. The audio decoder 2208 decodes the audio ES to generate an audio frame, and sends the data to the synchronization unit 2212. Alternatively, the video frame may be stored in a buffer (not shown in the figure) before being sent to the synchronization unit 2212. Similarly, the audio frame may be stored in a buffer (not shown in the figure) before being sent to the synchronization unit 2212.

The synchronization unit 2212 synchronizes the video frame and the audio frame, and provides the video/audio to a video/audio display 3214. For example, the synchronization unit 2212 synchronizes presentation of video and audio information. The information may be encoded in a syntax using time stamps related to presentation of an encoded audio and visual data and time stamps related to sending of a data stream.

If a subtitle is included in the bitstream, a subtitle decoder 2210 decodes the subtitle, and synchronizes the subtitle with the video frame and the audio frame, and provides the video/audio/subtitle to a video/audio/subtitle display 2216.

The present invention is not limited to the foregoing system, and either the image encoding device or the image decoding device in the foregoing embodiments can be used in another system like a vehicle.

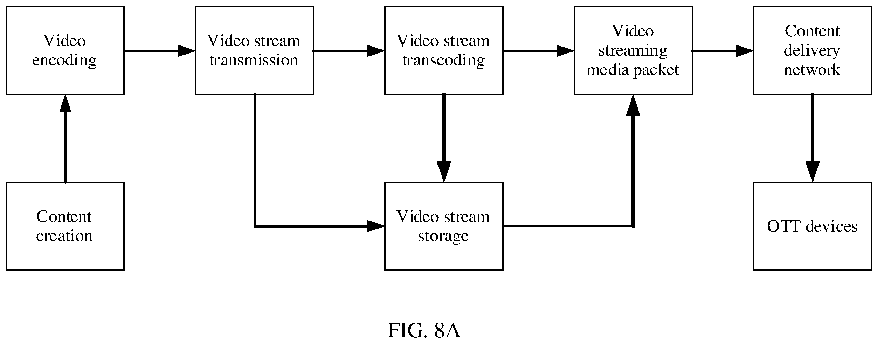

The following describes, with reference to FIG. 8A, a streaming media system to which an embodiment of this application is applicable. FIG. 8A is a diagram of an operating procedure of a streaming media system to which an embodiment of this application is applicable.

The streaming media system includes a content creation module that generates required content data, for example, a video or an audio. The streaming media system further includes a video encoding module that encodes generated content via an encoder. The streaming media system further includes a video stream transmission module that transmits an encoded video in a form of a bitstream. Optionally, a format of a video stream may be converted into a bitstream format of a transport protocol commonly used by an OTT (over-the-top) device. For example, the protocol includes but is not limited to a real-time streaming protocol (Real-Time Streaming Protocol, RTSP), a hypertext transfer protocol (Hypertext Transfer Protocol, HTTP), an HTTP live streaming protocol (HTTP Live streaming protocol, HLS), an MPEG dynamic adaptive streaming over HTTP (MPEG Dynamic Adaptive Streaming over HTTP, MPEG-DASH), a real-time transport protocol (Real-time Transport protocol, RTP), a real-time messaging protocol (Real-Time Messaging Protocol, RTMP), or any combination thereof. Optionally, video stream storage may be performed to store a raw format of the video stream and/or a plurality of converted bitstream formats for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or the stored video stream. Further, the streaming media system further includes a content delivery network (content distribution network, CDN), and the CDN is configured to deliver the video streaming media packet to a plurality of OTT devices such as mobile phones, computers, tablets, and home projectors.

It should be noted that video encoding, video stream transmission, video stream transcoding, video stream storage, video streaming media packet generation, and the content delivery network may all be implemented on a cloud server.

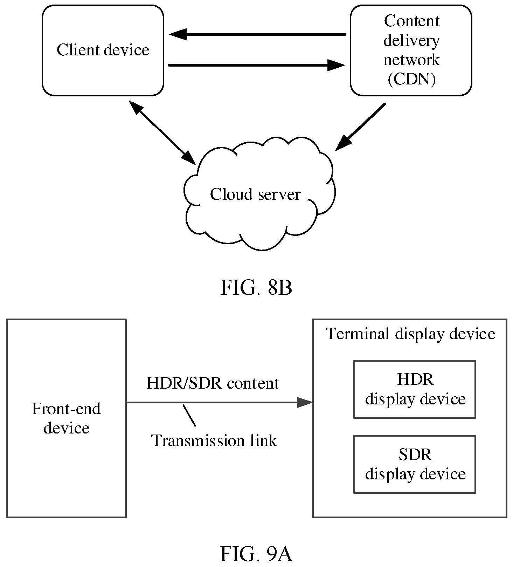

The following describes, with reference to FIG. 8B, an example architecture of a streaming media system in this application. The architecture of the streaming media system includes a client device, a content delivery network, and a cloud server.

A user on the client device sends a play or playback request to a cloud platform. Optionally, content of the sent request may be a title of a movie or television program to be played.

The cloud platform performs decision-making, replies to a client, and sends an address, on the CDN, of the content requested by the client to the client. Optionally, the content sent to the client may be a URL (uniform resource locator). Specifically, a playback application service on the cloud platform checks user authorization and permission, and then determines, by considering features of each client and current network conditions, which specific files are required to process the playback request. It should be noted that the content delivery network (CDN) periodically reports a running status, a learned route, and available content (file) to a cache control service on the cloud platform.

Then, the client requests, based on the address, the CDN to play the content. The CDN provides the content to the client and finally completes the request of the client.

The following describes, with reference to FIG. 9A, a system architecture to which an embodiment of this application is applicable. FIG. 9A is a diagram of a possible system architecture to which an embodiment of this application is applicable. The system architecture in this embodiment of this application includes a front-end device, a transmission link, and a terminal display device.

The front-end device is configured to capture or produce HDR/SDR content (for example, an HDR/SDR video or image).

In a possible embodiment, the front-end device may further be configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or respectively transmitted in two data packets. This is not specifically limited in embodiments of this application.

Optionally, the terminal display device may be configured to: receive the metadata and the HDR content, obtain, based on the global mapping information and the local mapping information that are included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a video camera, a camera, or an image drawing machine. The terminal display device may be a device with a video play function, for example, virtual reality (virtual reality, VR) glasses, a mobile phone, a tablet, a television, or a projector.

Optionally, the transmission link between the front-end device and the terminal display device may be a wireless connection or a wired connection. The wireless connection may use technologies such as long term evolution (long term evolution, LTE), the 5th generation (5th generation, 5G) mobile communication, and future mobile communication. The wireless connection may further include technologies such as wireless fidelity (wireless fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

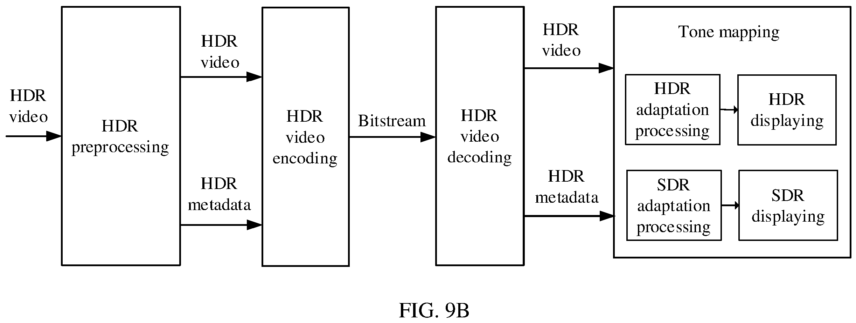

The following describes, with reference to FIG. 9B, an end-to-end image processing system according to an embodiment of this application. The system may be applied to the system architecture shown in FIG. 9A. FIG. 9B is a diagram of a structure of an image processing system according to an embodiment of this application. In FIG. 8B, for example, an HDR video is used as an example of HDR/SDR content. The image processing system includes an HDR preprocessing module, an HDR video encoding module, an HDR video decoding module, and a tone mapping module.

The HDR preprocessing module and the HDR video encoding module may be located in the front-end device shown in FIG. 9A, and the HDR video decoding module and the tone mapping module may be located in the terminal display device shown in FIG. 9A.

The HDR preprocessing module is configured to: extract dynamic metadata (for example, a maximum value, a minimum value, an average value, and a change range of luminance) from the HDR video, determine a mapping curve parameter based on the dynamic metadata and a display capability of a target display device, write the mapping curve parameter into the dynamic metadata to obtain HDR metadata, and transmit the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined part of a bitstream), to output a corresponding bitstream (an AVS or HEVC bitstream).

The HDR video decoding module is configured to: decode the generated bitstream (the AVS bitstream or the HEVC bitstream) according to a standard corresponding to a bitstream format, and output an HDR video and HDR metadata that are obtained through decoding.

The tone mapping module is configured to: generate a mapping curve based on mapping curve parameters in the HDR metadata obtained through decoding; perform tone mapping (namely, HDR adaptation processing or SDR adaptation processing) on the HDR video obtained through decoding; and send an HDR-adapted video obtained through tone mapping to an HDR display terminal for displaying, or send an SDR-adapted video to an SDR display terminal for displaying.

For example, the HDR preprocessing module may exist in a video capture device or a video production device.

For example, the HDR video encoding module may exist in the video capture device or the video production device.

For example, the HDR video decoding module may exist in a set-top box, a television display device, a mobile terminal display device, and a video conversion device like a live streaming or network video application.

For example, the tone mapping module may exist in a set-top box, a television display device, a mobile terminal display device, and a video conversion device like a live streaming or network video application. More specifically, the tone mapping module may exist in a form of a chip or a software program in the set-top box, the television display, or the mobile terminal display, and may exist in a form of a software program in the video conversion device like the live streaming or network video application.

In a possible embodiment, when both the tone mapping module and the HDR video decoding module exist in the set-top box, the set-top box may perform functions of receiving, decoding, and tone mapping for a video bitstream. The set-top box sends, through a high-definition multimedia interface (high-definition multimedia interface, HDMI), video data obtained through tone mapping to a display device for displaying, so that a user can enjoy video content.

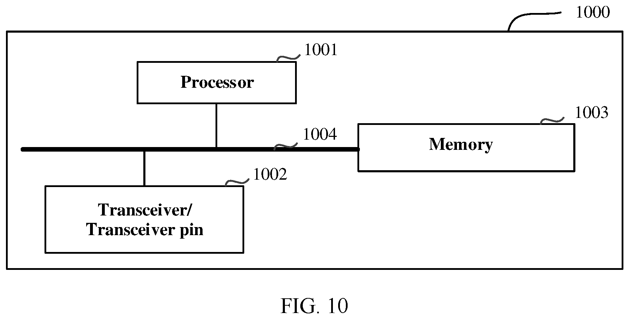

In an example, FIG. 10 is a block diagram of an apparatus 1000 according to an embodiment of this application. The apparatus 1000 may include a processor 1001 and a transceiver/transceiver pin 1002, and optionally, further includes a memory 1003.

Components of the apparatus 1000 are coupled together through a bus 1004. In addition to a data bus, the bus 1004 further includes a power bus, a control bus, and a status signal bus. However, for clarity of description, various buses in the figure are referred to as the bus 1004.

Optionally, the memory 1003 may be configured to store instructions in the foregoing method embodiments. The processor 1001 may be configured to: execute the instructions in the memory 1003, control a receive pin to receive a signal, and control a transmit pin to send a signal.

The apparatus 1000 may be the electronic device or a chip of the electronic device in the foregoing method embodiments.

The electronic device may be a terminal device, or may be a server.

All related content of the steps in the foregoing method embodiments may be cited in function descriptions of corresponding functional modules. Details are not described herein again.

An embodiment of this application further provides a chip, including one or more interface circuits and one or more processors. The one or more processors receive or send data through the one or more interface circuits. When the one or more processors execute computer instructions, the foregoing related method steps are performed, to implement the steps of methods in the foregoing embodiments. The interface circuit is a transceiver/transceiver pin 1002.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the methods in the foregoing method embodiments.

The electronic device, the computer-readable storage medium, the computer program product, or the chip provided in embodiments is configured to perform the corresponding method provided above. Therefore, for beneficial effect that can be achieved, refer to beneficial effect in the corresponding method provided above. Details are not described herein.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division. There may be other division in actual implementation. For example, a plurality of units or components may be combined or may be integrated into another apparatus, or some features may be ignored or not be performed. In addition, the displayed or discussed mutual coupling or direct coupling or communication connection may be implemented through some interfaces. The indirect coupling or communication connection between the apparatuses or units may be implemented in an electrical form, in a mechanical form, or in another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may further be a component of the processor. The processor and the storage medium may be located in an ASIC.

A person skilled in the art should be aware that in one or more of the foregoing examples, functions described in embodiments of this application may be implemented by hardware, software, firmware, or any combination thereof. When the functions are implemented by software, these functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

Embodiments of this application are described above with reference to the accompanying drawings. However, this application is not limited to the foregoing specific implementations. The foregoing specific implementations are merely examples, but are not limitative. Inspired by this application, a person of ordinary skill in the art may further make many modifications without departing from the purpose of this application and the protection scope of the claims, and all the modifications shall fall within protection of this application.

## Claims

1. A data encapsulation method, wherein the method comprises:
obtaining T.35 information, wherein the T.35 information comprises country code, terminal provider code, and terminal provider oriented code; and
encapsulating the T.35 information into an image file format, wherein the image file format comprises a first box, and the first box comprises the T.35 information.

2. The method according to claim 1, wherein the image file format further comprises a second box, and the second box comprises either a metadata box or a stream data box; and
the first box is nested in the second box.

3. The method according to claim 2, wherein the second box comprises a plurality of third boxes, and there is a hierarchical relationship between the plurality of third boxes; and
the first box is nested in a third box at any level.

4. The method according to claim 1, wherein
the image file format further comprises an item identifier and a media box, and the item identifier indicates that the T.35 information is an item;
the T.35 information comprises header information and a payload, the header information comprises the country code, the terminal provider code, and the terminal provider oriented code, and the payload comprises metadata of multimedia; and
the first box comprises the header information of the T.35 information, and the media box comprises the payload of the T.35 information.

5. The method according to claim 2 or 3, wherein the T.35 information is an item, and the metadata box comprises an image information box; and
the first box is nested in the image information box, and the first box is an item information entry box.

6. The method according to claim 2 or 3, wherein the T.35 information is an item property, and the metadata box comprises an item property container box and an item property association box; and
the first box is nested in the item property container box, and the item property association box comprises information about association between the T.35 information and a corresponding item.

7. The method according to claim 2 or 3, wherein the T.35 information is a sample entry, the stream data box comprises a track box, and the track box comprises a sample description box; and
the first box is nested in the sample description box.

8. The method according to claim 2 or 3, wherein the T.35 information is a sample group entry, the stream data box comprises a track box, and the track box comprises a sample group description box; and
the first box is nested in the sample group description box.

9. The method according to claim 2 or 3, wherein the T.35 information is a sample entry, the stream data box comprises a track box, the track box comprises a sample description box and a sample group description box, the T.35 information comprises header information and a payload, the header information comprises the country code, the terminal provider code, and the terminal provider oriented code, and the payload comprises metadata of multimedia;
the first box comprises the header information of the T.35 information, and the first box is nested in the sample group description box; and
the sample description box comprises the payload of the T.35 information.

10. The method according to claim 2 or 3, wherein the T.35 information is a sample entry, the stream data box comprises a timed metadata track box, and the timed metadata track box comprises a metadata sample entry box; and
the first box is nested in the metadata sample entry box.

11. The method according to any one of claims 1 to 10, wherein the method further comprises:
obtaining encoded multimedia data; and
encapsulating the encoded multimedia data into the image file format, wherein the image file format further comprises the media box or the stream data box, and the media box or the stream data box comprises the encoded multimedia data.

12. The method according to any one of claims 1 to 11, wherein the T.35 information further comprises the metadata of the multimedia.

13. A data obtaining method, wherein the method comprises:
receiving an image file format, wherein the image file format comprises a first box, and the first box comprises T.35 information; and
reading the T.35 information from the first box of the image file format, wherein the T.35 information comprises country code, terminal provider code, and terminal provider oriented code.

14. The method according to claim 13, wherein the image file format further comprises a second box, and the second box comprises either a metadata box or a stream data box; and
the first box is nested in the second box.

15. The method according to claim 14, wherein the second box comprises a plurality of third boxes, and there is a hierarchical relationship between the plurality of third boxes; and
the first box is nested in a third box at any level.

16. The method according to claim 13, wherein
the image file format further comprises an item identifier and a media box, and the item identifier indicates that the T.35 information is an item;
the T.35 information comprises header information and a payload, the header information comprises the country code, the terminal provider code, and the terminal provider oriented code, and the payload comprises metadata of multimedia; and
the first box comprises the header information of the T.35 information, and the media box comprises the payload of the T.35 information.

17. The method according to claim 14 or 15, wherein the T.35 information is an item, and the metadata box comprises an image information box; and
the first box is nested in the image information box, and the first box is an item information entry box.

18. The method according to claim 14 or 15, wherein the T.35 information is an item property, and the metadata box comprises an item property container box and an item property association box; and
the first box is nested in the item property container box, and the item property association box comprises information about association between the T.35 information and a corresponding item.

19. The method according to claim 14 or 15, wherein the T.35 information is a sample entry, the stream data box comprises a track box, and the track box comprises a sample description box; and
the first box is nested in the sample description box.

20. The method according to claim 14 or 15, wherein the T.35 information is a sample group entry, the stream data box comprises a track box, and the track box comprises a sample group description box; and
the first box is nested in the sample group description box.

21. The method according to claim 14 or 15, wherein the T.35 information is a sample entry, the stream data box comprises a track box, the track box comprises a sample description box and a sample group description box, the T.35 information comprises header information and a payload, the header information comprises the country code, the terminal provider code, and the terminal provider oriented code, and the payload comprises metadata of multimedia;
the first box comprises the header information of the T.35 information, and the first box is nested in the sample group description box; and
the sample description box comprises the payload of the T.35 information.

22. The method according to claim 14 or 15, wherein the T.35 information is a sample entry, the stream data box comprises a timed metadata track box, and the timed metadata track box comprises a metadata sample entry box; and
the first box is nested in the metadata sample entry box.

23. The method according to any one of claims 13 to 22, wherein the image file format further comprises the media box or the stream data box, and the media box or the stream data box comprises encoded multimedia data; and
the method further comprises:
obtaining the encoded multimedia data from the media box or the stream data box of the image file format; and
decoding the encoded multimedia data to obtain reconstructed multimedia data.

24. The method according to any one of claims 14 to 23, wherein the T.35 information further comprises the metadata of the multimedia.

25. An image file format, wherein the image file format is obtained through encapsulation according to the data encapsulation method according to any one of claims 1 to 12.

26. An electronic device, comprising:
a memory and a processor, wherein the memory is coupled to the processor; and
the memory stores program instructions, and when the program instructions are executed by the processor, the electronic device is enabled to perform the method according to any one of claims 1 to 12.

27. An electronic device, comprising:
a memory and a processor, wherein the memory is coupled to the processor; and
the memory stores program instructions, and when the program instructions are executed by the processor, the electronic device is enabled to perform the method according to any one of claims 13 to 24.

28. A computer-readable storage medium, wherein the computer-readable storage medium stores a computer program, and when the computer program is run on a computer or a processor, the computer or the processor is enabled to perform the method according to any one of claims 1 to 24.

29. A computer program product, wherein the computer program product comprises computer instructions, and when the computer instructions are executed by a computer or a processor, steps of the method according to any one of claims 1 to 24 are performed.

30. A computer-readable storage medium, wherein the computer-readable storage medium stores an image file format, and the image file format is obtained through encapsulation according to the data encapsulation method according to any one of claims 1 to 12.
